# EUROPEAN PATENT SPECIFICATION

(11) **EP 4 671 444 B1**
(45) Date of publication and mention of the grant of the patent: **02.12.2026**
(21) Application number: 25171673.4
(22) Date of filing: 22.04.2025
(51) Int. Cl.: E01D 2/00, E01D 2/02, E01D 19/12, E01D 21/00, G06F 30/13

(54) **INTERMEDIATE DIAPHRAGM-FREE, SUSPENDED FORMWORK-FREE, AND NEGATIVE MOMENT TOOTH BLOCK-FREE BEAM BRIDGE AND DESIGN METHOD THEREOF**
ZWISCHENMEMBRANFREIE, AUFGEHÄNGTE SCHALUNGSFREIE UND NEGATIVMOMENT-ZAHNBLOCKFREIE BALKENBRÜCKE UND ENTWURFSVERFAHREN DAFÜR
PONT DE POUTRE SANS BLOC DE DENT À COUPLE NÉGATIF ET SANS CALE DE COFFRAGE SUSPENDU SANS DIAPHRAGME INTERMÉDIAIRE ET SON PROCÉDÉ DE CONCEPTION

(30) Priority: 27.06.2024 CN 202410840674
(43) Date of publication of application: 31.12.2025
(73) Proprietor: China Construction Fifth Engineering Division Corp., Ltd, Changsha, Hunan 410100 (CN)
(72) Inventor: ZHOU, Shuai, Changsha City, Hunan Province 410100 (CN); YU, Peng, Changsha City, Hunan Province 410100 (CN); GAO, Zongyu, Changsha City, Hunan Province 410100 (CN); NIE, Jianguo, Changsha City, Hunan Province 410100 (CN); SHAO, Xudong, Changsha City, Hunan Province 410100 (CN)
(74) Representative: Santarelli

(56) References cited:
- CN-A- 115 162 132
- CN-U- 217 997 784
- GAO XIAO-LONG ET AL: "Experimental and numerical study on the tensile behaviours of wet joints in steel-UHPC composite decks using a novel tensile test setup", MATERIALS AND STRUCTURES, vol. 54, no. 2, 9 April 2021 (2021-04-09), XP037419815, ISSN: 1359-5997, DOI: 10.1617/S11527-021-01686-X

## Description

### Technical Field

The invention relates to the technical field of prefabricated bridges, and in particular, to an intermediate diaphragm-free, suspended formwork-free, and negative moment tooth block-free beam bridge and a design method thereof.

### Background Art

### Related art

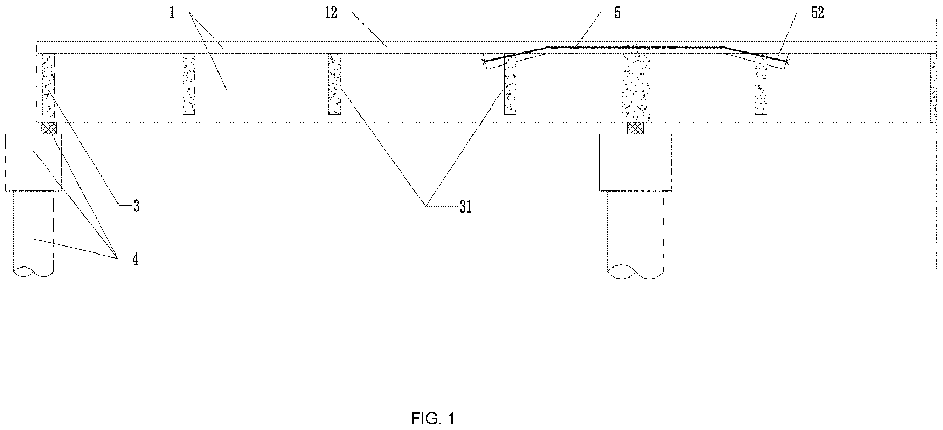

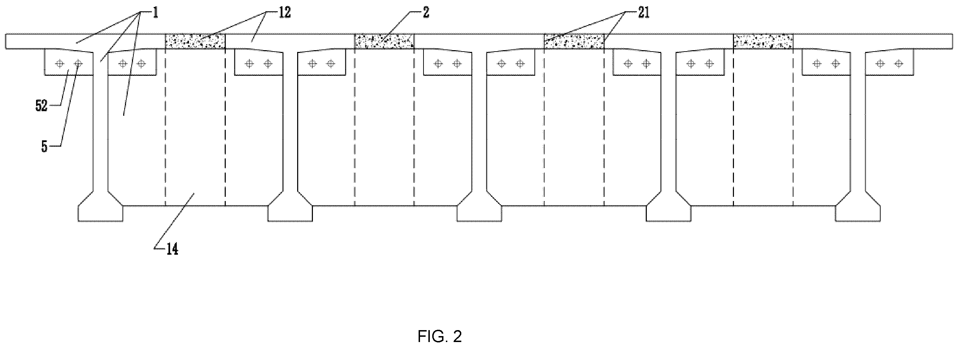

As shown in FIGS. 1 and 2, conventional prefabricated bridges using concrete deck slabs remain the predominant structural form for existing and under-construction bridges in China due to their significant cost advantages. However, there are still several challenges in prefabricated construction:
The first challenge is the large workload and poor construction quality of wet joints for intermediate diaphragms (namely, all transverse diaphragms except those at pier caps)-(1)The wet joint zones of intermediate diaphragms require on-site construction by workers suspended at high altitudes, posing high safety risks and resulting in slow construction progress; (2) Taking a commonly used concrete T-beam bridge (with a single span of 40 m and a half-width of 12.75 m) as an example, each span requires 3 to 5 intermediate diaphragms in the longitudinal direction. Each diaphragm contains 4 to 5 wet joint zones, requiring workers and equipment to be suspended at the wet joint seams of deck slabs between adjacent beams for rebar welding, suspended formwork installation, concrete pouring, and formwork removal. The alignment of large-diameter steel bars (φ25~φ28) is challenging, and welding quality is poor. Moreover, the extensive on-site workload and inconvenience of suspended operations significantly reduce the efficiency of prefabricated construction.

The second challenge is the enormous volume of suspended formwork for wet joints of the deck slab and high measure costs- (1) The wet joints of the deck slab must serve as access passages during the construction of the diaphragm wet joints before pouring, requiring a larger width. As a result, the concrete of the wet joints can only be considered as dead weight but cannot share the permanent load, leading to significant material waste; (2) The large number of diaphragms necessitates the setup of deck slab wet joints along the entire bridge length, resulting in a substantial amount of cast-in-place work; (3) When rigid joints are used for the wet joints of the deck slab, a large amount of suspended formwork must be set up, significantly reducing the efficiency of prefabricated construction; (4) During the removal of the suspended formwork for the wet joints of the deck slab, ground support structures must be set up, or personnel must be frequently lifted to retrieve the suspended formwork. Alternatively, the formwork may be allowed to fall directly to the ground, leading to a high loss rate. For high piers or river-crossing bridges, permanent bottom formwork or specially designed suspended platforms are required to recover the suspended formwork, significantly increasing the on-site measure costs.

The third challenge is the negative moment tendons must be anchored in tooth blocks and stressed in high-altitude suspension- (1) Prefabricated concrete deck slabs in prefabricated bridges are typically thin (generally 16 to 20 cm thick), hindering direct anchoring of negative moment tendons in reserved slots on the deck slab. Instead, tooth blocks must be installed underneath the deck slab for anchoring, posing high safety risks and slow construction speed; (2) The tensioning and anchoring of negative moment tendons for each beam require the setup of high-altitude suspended platforms on both sides of the deck slab wet joints, leading to high measure costs, inconvenient suspended construction, a significant reduction in prefabrication efficiency, and difficulties in ensuring construction quality in high-altitude operations and confined spaces.

It is evident that these issues significantly increase the on-site labor hours, measure costs, and safety risks of prefabricated bridges. When applied to overpass bridges, the impact on existing traffic is particularly pronounced. Meanwhile, using steel structure bridges results in significantly higher costs. Thus, whether concrete or steel structure prefabricated bridges are used, their actual prefabrication efficiency and benefits still require improvement.

Regarding the first challenge, some researchers have attempted improvements, but significant shortcomings remain: (1) In the Chinese invention patent "CN201610162690 - Reinforced Concrete T-Beam Bridge and Construction Method therefor", prefabricated diaphragms are connected through on-site steel bolt connections and transverse prestressed tendon tensioning, avoiding cast-in-place wet joints for diaphragms. However, steel connections between concrete structures require extremely high prefabrication precision (as concrete vibration can cause slight displacement of embedded steel components). This method significantly increases material costs, fails to avoid high-altitude suspension work, has very low adaptability to positioning coordinate and elevation errors in on-site prefabricated beams, and is unsuitable for bridges with more than two T-beams in the transverse direction except for single-track railway bridges; (2) The utility model patent "CN202121598690 - Transverse Wet Joints-Free Simply Supported Prefabricated T-Beam" employs an interlocking tooth structure (commonly referred to as dry joints such as tongue-and-groove connections) to connect prefabricated diaphragms. However, this method still demands high prefabrication precision, which is difficult to achieve with current prefabrication technology. Additionally, its dynamic performance for vehicle loads and seismic performance are considerably poor; (3) The Chinese invention patent "CN202010213138 - Novel Prefabricated T-Beam Structure and Widening Method thereof" and the utility model patent "CN202122232380 - Steel-Concrete Composite Simply Supported T-Beam Bridge" also exhibit similar issues found in existing technologies; and (4) The Chinese invention patent "CN201711444345 - T-Beam Suspension Work Platform Structure and T-Beam Diaphragm Construction Method" focuses on improving the suspension work platform for diaphragm wet joints in conventional T-beam bridges. However, it does not fundamentally address the issues of low safety, high labor intensity, and inefficiency caused by the extensive high-altitude suspension work required for diaphragm wet joints in traditional T-beam bridges.

Regarding the second challenge, some researchers have attempted improvements, but significant shortcomings remain: (1) In the Chinese invention patents "CN201610092674 - Prefabricated T-Beam for Easy Assembly and Its Construction Method" and "CN202111335794 - Prefabricated T-Beam Structure and Its Construction Method," prefabricated deck slabs are connected through reserved holes and embedded reinforcement at the top of the webs. While this avoids the cast-in-place wet joints of the deck slab, the embedded reinforcement in the web top is difficult to precisely position due to reinforcement cage manufacturing errors and concrete vibration. This structure effectively designs each T-beam flange as a sleeve grouting connection, which, based on sleeve grouting experience, results in a massive workload for construction positioning and reinforcement misalignment correction, making implementation highly challenging; (2) The Chinese invention patent "CN201710890164 - Prefabricated Concrete T-Beam Transverse Connection Joint Structure and Construction Method" arranges misaligned reinforcement at the wet joint of the deck slab and anchors each separately, reducing the welding work for wet joint reinforcement. However, it still does not eliminate the need for formwork setup and casting; (3) The Chinese invention patent "CN202111335795 - Unbonded Prefabricated Assembled T-Beam Connection Structure" uses a bolt-like connection to join the flanges of two prefabricated T-beams. However, this approach still requires extremely high prefabrication precision (with reinforcement cages difficult to position accurately, and concrete vibration causing slight displacement of embedded steel components). Additionally, it necessitates extra suspended platforms below the flanges for connection operations or for removing the connection brackets, further increasing on-site construction time and measure costs; and (4) The utility model patent "CN201920685632 - Basket Structure for the Construction of Wet Joints in Prefabricated Small Box Girder Overpass Bridges" improves the suspension formwork for wet joints in conventional T-beam bridges but does not fundamentally solve the issues of high labor intensity, high measure costs, and low efficiency in formwork erection and removal for deck slab wet joint construction in traditional T-beam bridges.

Regarding the third challenge, some researchers have attempted improvements, but significant shortcomings remain: (1) The Chinese invention patent "CN202010306429 - Construction Method for Bridge Structures in the Negative Moment Region of Prestressed Concrete Beams" avoids the challenges of traditional post-tensioning, such as duct reservation, tendon threading, and grouting. However, the process is complex, requires a large amount of ultra-high-performance concrete (UHPC) for on-site casting, significantly increases material costs, and has practical challenges due to difficulties in on-site curing of UHPC; (2) The Chinese invention patent "CN202121443136 - Detachable Pier-Top Negative Moment Anchorage Cushion Plate Structure for T-Beams" improves the anchorage cushion plate of negative moment tendons, reducing the difficulty of later-stage anchor sealing construction but failing to resolve the fundamental issues of negative moment tendon construction in conventional T-beam bridges; and (3) The Chinese invention patents "CN201911176619 - Suspended Basket for Negative Moment Construction in Limited Space of Middle Beams in T-Beams" and "CN202110420161 - High Pier T-Beam Negative Moment Tensioning Device and Method," as well as the utility model patents "CN201821214280 - T-Beam Negative Moment Tendon Tensioning and Steel Box Girder Flange Weld Coating Operation Platform" and "CN201911176619 - Suspended Basket for Negative Moment Construction in Limited Space of Middle Beams in T-Beams," all focus on improving suspended platforms for negative moment tendon construction. However, they do not fundamentally solve the issues of low work efficiency, high measure costs, frequent suspension operations, high safety risks, slow construction speed, and difficulties in ensuring construction quality for negative moment tendons in conventional T-beam bridges. A relevant construction method of a T-beam bridge is disclosed in CN115162132A.

### Technical problem

The most ideal way to fundamentally resolve the aforementioned issues is to achieve a safe and reliable design for prefabricated bridges with concrete deck slabs that eliminates the need for diaphragms, suspended formwork, and negative moment tooth blocks. In fact, in a few highway projects built in China during the 1990s, T-beam bridges without diaphragms were widely used. However, as documented on page 54 of the monograph 100 Questions on Bridge Design (Second Editi*on)* and in the paper "Analysis of Defects and Evaluation of Reinforcement Effects in T-Beam Bridges without Transverse Diaphragms", these bridges have exhibited numerous longitudinal cracks in the deck slab surfacing at the interface of new and old concrete along the length of the bridge after long-term operation. The fundamental reason is that existing design and calculation methods applied to such bridges are not sufficiently refined and fail to accurately determine the stress state of the deck slab after the removal of diaphragms. According to Article 4.2 of China's current standard JTG 3362-2018 Code for Design of Highway Reinforced Concrete and Prestressed Concrete Bridges and Culverts and the deck slab design methods described in *Bridge Engineering,* calculations indicate that the upper edge of the deck joint interface should be in a compressed state in the transverse direction. This, however, does not explain the occurrence of cracking in this area. Evidently, existing design methods are inadequate, as they fail to modify or appropriately reinforce the deck slab after the diaphragms are removed, ultimately leading to widespread defects. The final solution, as mentioned in "Analysis of Defects and Evaluation of Reinforcement Effects in T-Beam Bridges without Transverse Diaphragms", has been to reinstall diaphragms to mitigate the defects.

Therefore, there is an urgent need for a structural and a design method thereof that can effectively resolve the issue of longitudinal cracking in deck slabs of diaphragm-free beam bridges, preventing the widespread occurrence of such cracks at the interface of new and old concrete in the deck slab after long-term operation.

### Summary of the Invention

In order to solve the above problems, the present invention proposes an intermediate diaphragm-free, suspended formwork-free, and negative moment tooth block-free beam bridge and design method thereof, and provides the structure of an intermediate diaphragm-free prefabricated beam bridge and a design and calculation method thereof, which effectively solves the problem of longitudinal cracking at the joints of the deck slab in the intermediate diaphragm-free beam bridge, and realizes the elimination of a suspended formwork for wet joints of the deck slab and the elimination of negative bending moment tendon suspension tensioning, which is convenient for the actual design and promotion and application of such bridges. The invention is set out in the appended claims.

In order to achieve the above-mentioned object of the invention, the present invention provides the following technical solutions:
An intermediate diaphragm-free, suspended formwork-free, and negative moment tooth block-free beam bridge and a design method thereof, in which the intermediate diaphragm-free, suspended formwork-free, and negative moment tooth block-free beam bridge includes prefabricated main girders, a wet joint, pier cap transverse beams, and lower structures. Adjacent prefabricated main girders are connected by the wet joint, each pier cap transverse beam is connected to a respective one of the prefabricated main girders, and the pier cap transverse beams are respectively arranged above the lower structures.

The prefabricated main girders each include a web and a concrete deck slab; adjacent concrete deck slabs are connected by the wet joint, a contact surface between the concrete deck slab and the wet joint is a joint interface, and the web is integrally formed with the concrete deck slab.

Based on the intermediate diaphragm-free, suspended formwork-free, and negative moment tooth block-free beam bridge, the design method of the beam bridge includes the following steps:
S1, design of initial structural parameters of the prefabricated main girders: assuming, based on statistical data of structural dimensions of a built beam bridge, a sectional form, maximum span L, and sectional inertia moment / of the prefabricated main girders; assuming a thickness of each concrete deck slab at the joint interfaces is *T*₁, a thickness of each concrete deck slab at the webs is *T*₂ and a number of the prefabricated main girders arranged in a transverse direction of the beam bridge is J; numbering the webs from left to right in the transverse direction as 1st, 2nd, 3rd,..., (N-1)th, and Nth, respectively, and a transverse distance between center lines of the webs at both ends of the beam bridge in the transverse direction being D; S2, calculation of indirect transverse stress of concrete deck slabs: setting, according to an actual support situation, a load at an outermost part in the transverse direction of the beam bridge, and calculating a non-uniform deflection {Δ*ₙ*} of the prefabricated main girders, where {△*ₙ*}={△₁*,* △₂, △₃, ..., △_{*N*-1}*,* △*_{N}*}, and △₁, △₂, △₃,... *,*△_{*N*-1}*,* and △*_{N}* are vertical deflections of the 1st, 2nd, 3rd,..., (N-1)th, and Nth webs, respectively; taking a segment along a longitudinal direction of the beam bridge, assuming that bottom parts of the webs in the segment are vertically rigidly supported, and applying forced displacements of △₁, △₂, △₃, ... , △_{*N*-1}*,* and △*_{N}* to the bottom parts of the 1st, 2nd, 3rd,..., (N-1)th, and Nth webs correspondingly, and calculating the indirect transverse stress σ_{b1} on a top surface of the concrete deck slabs at this moment;
S3, calculation of direct transverse stress of concrete deck slabs: assuming that the bottom parts of the webs are vertically rigidly supported, setting the load at the outermost part in the transverse direction of the beam bridge, and calculating the direct transverse stress σ_{b2} on the top surface of the concrete deck slabs;
S4, crack resistance calculation of the top surface of the concrete deck slabs: calculating a most unfavorable transverse stress σ_{b} on the top surface of the concrete deck slab by superposition of the indirect transverse stress σ_{b1} and the direct transverse stress σ_{b2}, that is, σ_{b} = σ_{b1}+σ_{b2};
if σ_{b} ≥ *f*ₜⱼₚ at the joint interface, where *f*ₜⱼₚ is the fatigue tensile strength at the joint interface, proceeding to step S5; and
if *σ_{b}<fₜⱼₚ* at the joint interface, proceeding to step S6;
S5, increasing *T*₁ and/or *T*₂ and/or J and/or *I,* and/or reducing L, returning to step S2, and performing the crack resistance calculation of the top surface of the concrete deck slabs again; and
S6, completion of remaining design according to a conventional method: applying multi-lane, multi-vehicle live loads and other design loads following a conventional influence line approach, determine a configuration of rebars and tendons in the prefabricated main girders according to a most unfavorable full-bridge internal force state under the design load combination and a conventional structural design method to complete the beam bridge design.

The technical principle and effect of the above invention are that, when the load is eccentrically loaded on the outermost part, each prefabricated main girder will deflect and the deflection values △₁, △₂, △₃, ..., △_{*N*-1}, and △*_{N}* are different, but due to the existence of the intermediate diaphragms, the vertical deflection difference between each prefabricated main girder and the adjacent prefabricated main girder is basically the same (△₁-△₂ ≈△₂-△₃ ≈...≈ △_{*N*-1}-△*_{N}*), that is, the shape of the top surface of the deck slab after deflection is still close to a plane shape. When there is no intermediate diaphragm, the vertical deflection differences will be significantly different, that is, there will be an obvious non-uniform deflection {△*ₙ*}. The non-uniform deflection causes the deck slab to have a larger curvature and a relatively arched deformation, thereby causing an indirect tensile stress σ_{b1} in the transverse direction of the bridge on the top surface of the deck slab, especially the upper edge of the joint interface. The superposition of the indirect tensile stress and the direct tensile stress σ_{b2} caused by the transverse bending moment generated when the load is applied directly should not exceed_*f*ₜⱼₚ at the joint interface to avoid cracking of its upper edge (this is not taken into account when calculating the deck slab in the existing design method, and the excess σ_{b} is also the direct cause of the longitudinal cracks in the driving surface of T-beam bridges without intermediate diaphragms in the existing technology). By increasing *T*₁, *T*₂, *J* or *I,* or by reducing *L, σ_{b}* can be controlled to a level lower than *fₜⱼₚ,* and the whole bridge design can be completed subsequently using the same conventional calculation method as that of a beam bridge with an intermediate diaphragm.

Preferably, when setting the load in step S2, a single car or train load is set at the leftmost side of the beam bridge in the transverse direction, the distance between the load and the leftmost end of the beam bridge meeting the requirements of the regulations. When setting the load in step S3, the single vehicle load is set at the leftmost side of the beam bridge in the transverse direction, the distance between the load and the leftmost end of the beam bridge meeting the requirements of the regulations.

Preferably, for the section of the concrete deck slab with a longitudinal width of *a*₀, the σ_{b1} in step S2 is such that σ_{b1} = *M*_{b1}/*W_{b},* where *W_{b}* is the section modulus of the section of the concrete deck slab with the longitudinal width of *a*₀, and *M*_{b1} is the indirect transverse bending moment of the section of the concrete deck slab with the longitudinal width of *a*₀.

*M*_{b1} = *M*_{b1max}*d_{y}*/(*D*/2), where *d_{y}* is the transverse distance of the section from the center line of the web on the leftmost side; *M*_{b1max} = *E*_{c} /_{bmax}/*R*_{eq}, /_{bmax} = a₀ · [max(*T*₁, *T*₂)]³/12, where *E*_{c} is the elastic modulus of the concrete deck slab, *R*_{eq} is the equivalent curvature radius of the concrete deck slab under the forced displacement of △₁, △₂, △₃, ... , △_{*N*-1}, and △*_{N}*; *R*_{eq} =(*D*/2)²/(2△_{g}), where △_{g} is the relative camber; when N is an odd number, △_{g} = △_{(*N*+1)/2}-(△₁+△*_{N}*)/2, and when N is an even number, △_{g} *=*(△_{*N*/2}*+*△_{*N*/2+1})/2-(△₁*+*△*_{N}*)/2*.*

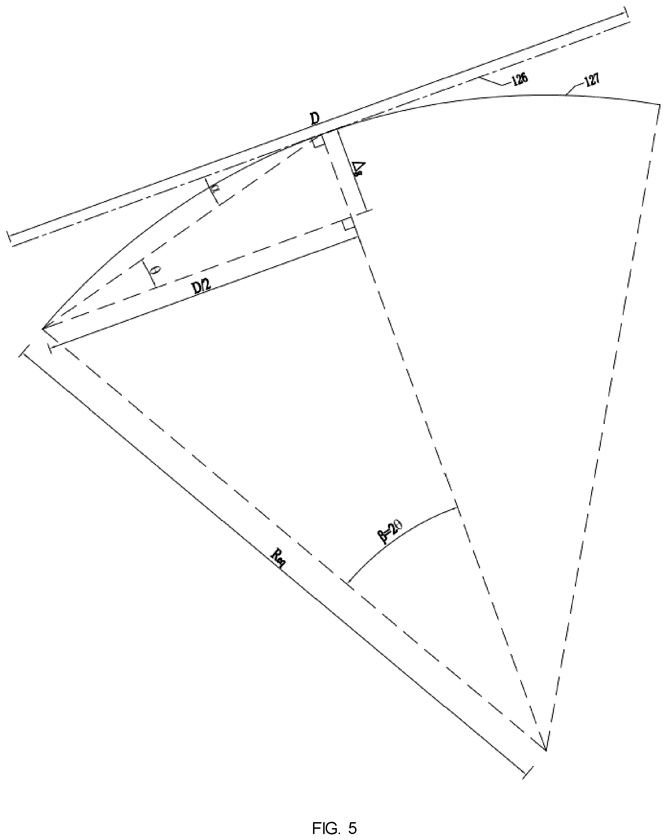

The technical principle and effect of the above invention are as follows: the non-uniform deflection of each prefabricated main girder causes the deck slab to produce a relative arch deformation, so σ_{b1} is positively correlated with the curvature of the deck slab. Therefore, combined with FIG. 5, the calculation diagram of the equivalent curvature radius *R*_{eq} of the deck slab in the present invention shows that: because the deformation of the bridge structure in actual operation is still small, it can be assumed that the upper edge of the cross-section of the arched deck slab is an arc, so the curvature radius of the arc *R*_{eq}=(*D*/2)/sin*β*, according to the small angle approximation principle, sin*β*≈*β*; further according to the chord tangent angle theorem, *β*=2α, according to the equal alternate angle theorem of parallel lines, *α=θ;* finally, according to the small angle approximation principle, θ≈tan*θ*=△_{g}/(*D*/2), and the above formulas can be combined to prove *R*_{eq} =(*D*/2)²/(2△_{g}). In addition, because the deformation of the deck slab still belongs to the category of small displacement theory, the relative camber △_{g} ≈ the vertical deflection of the deck slab at the transverse centerline of the whole bridge - the average of the vertical deflections of the 1st and Nth webs.

Preferably, the non-uniform deflection {△*ₙ*} in step S2 is such that {△*ₙ*} = {*mₙ*}*w,* where w is the vertical deflection generated when assuming that one of the prefabricated main girders of the beam bridge bears the load in step S2 alone; {*mₙ*} is the set of load transverse distribution factors of all the prefabricated main girders when loaded according to step S2, {*mₙ*} is calculated according to the rigidly connected plate method, and the equivalent moment of inertia of the longitudinal unit-width deck slab in the rigidly connected plate method is *I*_{beq} = *F* (*D*/(*N*-1))³/(48*E*_{c}*w*_{eq}), where *E*_{c} is the elastic modulus of the concrete deck slab, F is the unit force, and *w*_{eq} is the equivalent flexibility.

*w*_{eq} is calculated as follows: assuming the concrete deck slab between the center lines of the 1st and 2nd webs to be a simply supported beam supported at the webs, when *F* is applied at the mid-span of the simply supported beam, *w*_{eq} is the mid-span vertical deflection calculated by a conventional structural mechanics method or finite element modeling.

The technical principles and effects of the above invention are as follows: the calculation error of the transverse distribution factor generally has a small impact on the calculation of the longitudinal force of the prefabricated main girders, but has a great impact on the calculation of the indirect transverse stress σ_{b1} of the deck slab of the intermediate diaphragm-free beam bridge; and the stiffness of the deck slab in practice often varies along the transverse direction of the bridge, but the stiffness of the deck slab in the rigid-connected plate method can only be considered as a constant value, which is bound to bring about a large error. Therefore, based on the equal displacement under unit force, the deck slab with variable stiffness can be approximated as a deck slab with equal stiffness as a simply supported beam to solve its equivalent moment of inertia *I*_{beq}, and *I*_{beq} can be used in the calculation of the rigid-connected plate method.

Preferably, when calculating the non-uniform deflection {△*ₙ*} in step S2, a full-bridge finite element model is established according to a conventional Hambly's grillage method, and the width of the virtual transverse beam in the model is the actual working width a of the concrete deck slab in the longitudinal direction of the bridge, and a= max{(*a*₁+2*h*ₚ)+ *D*/*(N-1)*/*3, 2D*/*(N-*1)/3}, where a₁ is a contact dimension of a heaviest wheel of the vehicle load in the longitudinal direction of the bridge, and *h*ₚ is a total thickness of a leveling layer and a pavement layer above the concrete deck slabs; a single car or train load is set to the leftmost side, and the non-uniform deflection {△*ₙ*} of the prefabricated main girders is calculated.

The technical principle and effect of the above invention are as follows: when the automobile load is applied as a lane load, the concentrated force of the lane load is very large, while the actual wheel load is a uniform force with a certain width and will spread to the deck slab within a certain range in the longitudinal direction of the bridge, resulting in a large difference between the deformation and stress of the virtual beam of the conventional grillage method under the concentrated force of the lane load and the actual situation. Considering that the calculation error of the vertical deflection has a great influence on the indirect transverse stress σ_{b1} of the deck slab of the intermediate diaphragm-free beam bridge, when the grillage method is used to model the intermediate diaphragm-free beam bridge, the width of the virtual beam is taken as the actual working width a of the deck slab in the longitudinal direction of the bridge, which can effectively reduce the calculation error of the vertical deflection and the deck slab stress.

Preferably, when calculating the σ_{b2} in step S3, a segment with a longitudinal width of a₀ is taken at a longitudinal mid-span of the beam bridge, the bottom parts of the webs in the segment are assumed to be vertically rigidly supported, the heaviest axis of a single vehicle load is set at the leftmost side of the segment, and an upper edge stress σ_{b22} in the transverse direction at each section of the segment is calculated according to a conventional structural mechanics method or finite element modeling; σ_{b2} at each section is such that σ_{b2} = σ_{b22}*a*₀/*aₙ*, when the section is located between the nth web and the *(n* +1)th web, *aₙ=*min{(*a*₁*+*2*hₚ*)+*D*/(*N-1)*/*3,* 2D/(N-1)/3}+(n-1)D/(N-1)/3, otherwise a*ₙ* =(*a*₁+2 *h*ₚ)+2*d*_{c}, a, is the contact dimension of the heaviest wheel of the vehicle load in the longitudinal direction of the bridge, *h*ₚ is the total thickness of the leveling layer and the pavement layer above the concrete deck slab, *d*_{c} is the distance from the leftmost edge of the leftmost-wheel contact area of the vehicle load to the center line of the leftmost web.

The technical principle and effect of the above invention are as follows: in the actual full-bridge stress, when the vehicle load is located between the 1st web and the 2nd web, the longitudinal width of the deck slab between these two webs that actually bears the vehicle load is *aₙ;* and when the effect of the vehicle load diffuses to between the 2nd web and the 3rd web, the longitudinal width of the deck slab that actually bears the vehicle load will be further enlarged; and the same pattern applies when the section is located between the nth web and the *(n* +1)th web; therefore, based on the geometric relationship, a 45° diffusion angle is assumed for safety considerations, and the calculation follows the aforementioned formula.

Preferably, in step S4, σ_{b} is calculated only at a mid-span position at a maximum span of the concrete deck slabs in the longitudinal direction, and the crack resistance calculation is performed only at an joint interface at a distance d from a center line of a leftmost web; when J is an odd number, d is the distance from the center line of the leftmost web in the transverse direction to the left joint interface of the (J+1)/2-th prefabricated main girder; when *J* is an even number, d is the distance from the center line of the leftmost web in the transverse direction to the right joint interface of the J/2-th prefabricated main girder.

**The** technical principles and effects of the above invention are as follows: the mid-span deflection at the maximum span in the longitudinal direction is the maximum vertical deflection of the entire bridge. Here, the non-uniform deflection effect between the prefabricated main girders is also the most pronounced, that is, σ_{b} is typically designed for controlling of the mid-span position at the maximum span in the longitudinal direction; and the maximum bending moment of the deck slab caused by the non-uniform deflection usually occurs at the center line of the entire bridge in the transverse direction and decreases toward both sides, so only the joint interface closest to this point, that is, the joint interface at a distance d from the center line of the leftmost web, is verified.

Preferably, the *f*ₜⱼₚ in step S4 is such that *f*ₜⱼₚ = γⱼγₚ·min (f_{ty}*, f*ₜⱼ), *f*_{ty} is the design value of the concrete tensile strength of the prefabricated main girder, *f*ₜⱼ is the design value of the concrete tensile strength of the wet joint, γⱼ is the concrete tensile strength correction coefficient at the joint interface, and *γ*ₚ is the concrete fatigue tensile strength correction coefficient.

**The** technical principle and effect of the above invention are as follows: a transition layer with a high water-cement ratio exists at the interface between the new and old concrete, which is prone to formation of a porous cement mortar matrix, and the initial damage of the old concrete during roughening and the shrinkage stress of the new concrete also affect the stress performance at the interface, so the tensile strength of the concrete at the joint interface must be reduced. Meanwhile, considering that the bridge is subjected to long-term live loads and that the stress in the deck slab repeatedly fluctuates between tension and compression, the fatigue effect on the tensile strength of concrete should be considered for further correction, and generally γⱼ =0.49 and γₚ=0.6 are taken.

Preferably, a cantilever slab is provided at a transverse end of each of the prefabricated main girders, and a transverse net distance of the cantilever slabs between adjacent prefabricated main girders does not exceed 60 cm. A cushion plate is provided above the cantilever slab, and the cushion plate is connected to the wet joint to form an integrated load-bearing structure. **The** technical principle and effect of the above invention are as follows: after the diaphragm-free design is realized according to the above design method, it is no longer necessary to have personnel move up and down from the joint of the deck slab to apply the diaphragm, so the cantilever slab can be preset and only a small clearance can be left between the cantilever slab and the adjacent prefabricated main girder, thereby greatly reducing the amount of cast-in-place workload of the wet joint, avoiding the performance waste caused by the wet joint concrete being unable to bear its own wet weight, and the prefabricated main girder of the intermediate diaphragm-free beam bridge can have a large bending stiffness under the same usage amount of concrete, thereby saving the amount of steel. In addition, by sequentially placing small pieces of thin cushion plates on the cantilever slab, protection can be formed and serve as a permanent bottom formwork, thereby completing the rebar connection and cast-in-place operation of the wet joint, and the thin cushion plates may also be prefabricated with concrete materials and form an integrated structure with the wet joint concrete to bear the loads, which will not lead to an increase in construction volume and waste of material performance.

Preferably, two or more prefabricated main girders are provided in the longitudinal direction of the beam bridge, and the adjacent prefabricated main girders in the longitudinal direction of the beam bridge are connected by a negative bending moment tendon, and min (*T*₁, *T*₂) ≥ 20 cm, anchoring grooves are preset in the concrete deck slabs, in which the negative bending moment tendon is anchored.

**The** technical principle and effect of the above invention content are: the intermediate diaphragm is eliminated according to the above design method, so that there is no need for personnel to move up and down the deck joints to thread, tension and anchor the negative bending moment tendons, and the deck thickness of the intermediate diaphragm-free beam bridge is thicker than that of the conventional prefabricated beam bridge, so the negative bending moment tendons can be anchored directly on the deck slab in the reserved grooves on the thicker deck slab.

Preferably, the concrete deck slab of the prefabricated main girder is provided with deck slab holes arranged at intervals in the longitudinal and transverse directions of the bridge, and deck slab cross ribs are provided between the longitudinally adjacent deck slab holes, and the deck slab cross ribs are provided with shear reinforcement rebars arranged at intervals along the transverse direction of the bridge.

**The** technical principles and effects of the above invention are as follows: holes are set in the deck slab, so that the stiffness of the deck slab can be significantly improved without increasing the dead load weight, thereby reducing the non-uniform deflection effect and reducing the tensile stress on the top surface of the deck slab, while greatly reducing the amount of transverse rebars in the deck slab; the deck slab cross ribs are set between the holes, being able to form an I-shaped section together with the deck slabs above and below the surrounding holes to bear the wheel load, and the reinforcement of the deck slab can be designed according to the conventional I-section beam. Compared with the stress state of the deck slab as a rigid truss without the deck slab cross ribs, the calculation and reinforcement workload can be significantly simplified.

Preferably, each of the prefabricated main girders further includes a closed box-shaped section structure, a bottom slab is provided at the bottom of the web, the bottom slab, the web and the concrete deck slab together form the closed box-shaped section structure, the transverse end of the concrete deck slab is provided with an end thickened part, and the end thickened part is connected to the wet joint.

Preferably, the transverse end of the concrete deck slab is provided with an end bevel, the end thickened part includes a bevel surface of thickened part and a plane surface of thickened part, the bevel surface of thickened part is connected to the wet joint, a slope of the bevel surface of thickened part is not greater than 1.00, and *T*₁ > *T*₂.

**The** technical principle and effect of the above invention content are that the joint interface is thickened, although the non-uniform deflection effect is not significantly reduced, the bending stiffness of the section at the joint interface is significantly increased due to the nearly cubic relationship between the section stiffness and thickness, thereby significantly reducing the tensile stress at the joint interface. With the end bevel, the shear stiffness and shear bearing capacity of the joint interface between new and old concrete can be significantly improved, and the upward development of cracks at the lower edge of the interface can be blocked to a certain extent. When the slope of the bevel surface of thickened part is no more than 1.00, the transmission of the transverse stress of the deck slab can be facilitated and the influence of stress concentration can be reduced.

Preferably, bottom slabs are provided at the bottom parts of the webs of the prefabricated main girders, end thickened parts are provided at the transverse ends of the concrete deck slabs, and deck slab transverse ribs are provided between the webs and the end thickened parts. **The** deck slab transverse ribs are located below the concrete deck slabs and are arranged at intervals along the longitudinal direction of the concrete deck slabs.

Preferably, each concrete deck slab is connected to a corresponding one of the deck slab transverse ribs, and the thickness *T*₁ of each concrete deck slab at the joint interface includes a sectional thickness of the concrete deck slab and a sectional thickness of the corresponding one of the deck slab transverse ribs at the joint interface, and *T*₁≥ 30 cm.

**The** technical principle and effect of the above invention content are as follows: the deck slab and the transverse rib below form a T-shaped section. When the section height increases, its stiffness increases nearly cubically, which can significantly reduce the non-uniform deflection effect. In addition, the tensile stress at the joint interface can be reduced by the significant increase of the bending stiffness.

Preferably, the webs of the prefabricated main girders include a steel structure, and side surfaces of the webs are provided with web vertical ribs spaced apart along the longitudinal direction of the beam bridge, and top ends of the web vertical ribs are connected to the deck slabs.

Preferably, the web vertical ribs are located at the same positions as the deck slab transverse ribs over the longitudinal direction of the beam bridge to resist a transverse deformation transmitted by the deck slab transverse ribs.

The technical principle and effect of the above invention are as follows: when the webs of the prefabricated main girders have a steel structure, the deformation transmitted from the transverse ribs of the deck slab will significantly reduce the local stability of the webs, so corresponding web vertical ribs are needed to eliminate the adverse effects of the deck slab transverse ribs.

The beneficial effects of the present invention are summarized as follows:
The present invention proposes an intermediate diaphragm-free, suspended formwork-free, and negative moment tooth block-free beam bridge and a design method thereof, and the beneficial effects include:
1. No intermediate diaphragms: the present invention proposes an intermediate diaphragm-free beam bridge and a design method thereof. In the present invention, by eliminating the transverse diaphragms outside the pier caps, the present invention avoids the extensive high-altitude suspended construction required for a large number of wet joint zones of the intermediate diaphragms in conventional prefabricated beam bridges. This significantly enhances construction safety, reduces on-site workload, and greatly improves the efficiency of prefabricated assembly. Additionally, the design method of the present invention clarifies the non-uniform deflection effect of an intermediate diaphragm-free beam bridge, defines that the most unfavorable transverse stress of the deck slab of an intermediate diaphragm-free beam bridge is the superposition of the indirect tensile stress σ_{b1} at the upper edge of the joint interface under the non-uniform deflection effect and the direct tensile stress σ_{b2} under the direct action of vehicle load, and provides a calculation method for the most unfavorable transverse stress on the top surface of the deck slab of this type of bridges. Ultimately, by controlling the most unfavorable transverse stress of the deck slab of the intermediate diaphragm-free beam bridge below the fatigue tensile strength at the concrete joint interface, the safety and reliability of the structural design is ensured, and the problem of longitudinal cracking of the driving surface at the joint of the intermediate diaphragm-free beam bridge that may be caused by the existing design is effectively avoided.
2. No suspended formwork required at wet joints of deck slab: the present invention does not require personnel to go up and down from the joints of deck slab to construct intermediate diaphragms and negative bending moment tendons, so that the width of the wet joints can be designed to be as narrow as possible. A cantilever slab structure is provided at the transverse end of the concrete deck slab in the prefabricated main girders, with the small cushion plate above the cantilever slab, a complete elimination of formwork and form removal operations for the entire bridge is realized. Therefore, the present invention can avoid the problem of extensive suspended formwork casting and removal required for wet joints of deck slabs of conventional prefabricated beam bridges, and the present invention reduces the volume of cast-in-place concrete, greatly saves the construction cost of wet joint, and significantly improves the efficiency of prefabricated construction.
3. Elimination of high-altitude suspension work for negative bending moment tendons: in the present invention, the negative bending moment tendons are directly anchored in the thicker deck slab, eliminating the need of a large number of tooth blocks under the deck slab for prestressed anchoring. This avoids the extensive high-altitude suspension tensioning operations for the negative bending moment tendons in conventional prefabricated beam bridges, greatly enhancing construction safety, greatly saving the suspension construction cost, significantly reducing labor hours of tensioning, improving the workspace and working environment for prestressed tensioning operation, and ensuring better construction quality.
4. Better mechanical properties: compared to conventional prefabricated beam bridges with concrete deck slabs, this invention significantly reduces the width of the deck wet joints. This mitigates the adverse effects of cast-in-place concrete and longitudinal rebars at the wet joints, which are typically excluded from longitudinal force calculations due to the low reliability of new-to-old concrete interfaces. As a result, the deck slab of the prefabricated main girders can be made wider, increasing the longitudinal stiffness of the prefabricated main girders and thereby enhancing their overall longitudinal load-bearing performance.
5. More aesthetic bridge appearance: this invention eliminates the need for numerous closely spaced intermediate diaphragms, providing better longitudinal transparency and visual appeal compared to conventional prefabricated beam bridges. Furthermore, by removing large exposed anchoring tooth blocks, the bridge structure achieves a more streamlined and aesthetically pleasing profile.
6. More social, environmental and economic benefits: the intermediate diaphragm-free, suspended formwork-free, and negative moment tooth block-free beam bridge of the present invention completely eliminates the high-altitude suspension operation of the intermediate diaphragms and negative bending moment tensions of the conventional prefabricated beam bridges, significantly saving labor hours, reducing the impact on the traffic under the bridge and the surroundings, and significantly improving the social benefits. Thin cushion plates with small volumes are used in wet joints to prevent leakage and serve as permanent bottom forms to bear load together with the cast-in-place wet joints, thus avoiding extensive formwork removal operations and damage to the formwork caused by forced formwork removal, and also improving environmental benefits. The economic benefits have been significantly improved by completely eliminating the amount of steel reinforcement in the intermediate diaphragms, significantly reducing the amount of transverse reinforcement in the deck slab, completely eliminating the suspension tensioning facilities for negative bending moment tendons, and completely eliminating all suspension formwork and high-altitude formwork removal operations of wet joints.

From the above, it can be seen that the present invention eliminates the problem of a large number of diaphragms and extensive high-altitude suspension construction in the wet joint zones of the diaphragms in conventional prefabricated beam bridges through the design of the intermediate diaphragm-free beam bridge, and the design and calculation process of the beam bridge takes into account the significant non-uniform deflection of the beam bridge when there is no diaphragm. The indirect tensile stress σ_{b1} and the direct tensile stress σ_{b2} at the upper edge of the joint interface of the beam bridge are superimposed to verify the crack resistance of the top surface of the deck slab, so as to avoid the phenomenon of cracking of the driving surface of the beam bridge in use.

Furthermore, based on the intermediate diaphragm-free beam bridge structure, the present invention arranges cantilever slabs and cushion plates at the transverse ends of the prefabricated main girders, thereby avoiding the need for extensive suspended formwork casting and formwork removal operations for the wet joints of the deck slab of conventional prefabricated beam bridges, reducing the amount of on-site construction, avoiding extensive high-altitude operations during the construction process, improving the safety factor of the construction process, and significantly increasing construction efficiency.

Furthermore, based on the above-mentioned beam bridge structure, the present invention anchors the negative bending moment tension in the concrete deck slab of the beam bridge. Through this structural design, the beam bridge does not require personnel to go up and down from the deck slab joints to thread, tension and anchor the negative bending moment tension, thereby further improving the construction safety of the beam bridge and its design method, improving the working environment and the construction quality.

Therefore, the intermediate diaphragm-free, suspended formwork-free, and negative moment tooth block-free beam bridge and design method thereof of the present invention are novel prefabricated beam bridges and design method that are safer, more economical, more applicable and more aesthetic than the existing technology, and can be widely used in the construction of various highways, railways and municipal bridges.

### Brief Description of the Drawings

FIG. 1 is a longitudinal section view of a conventional prefabricated bridge with a concrete deck slab in the background art of the present invention taken along the center line of the web;
FIG. 2 is a standard cross-sectional view of a conventional concrete T-beam bridge in the background art of the present invention;
FIG. 3 is a cross-sectional schematic diagram of an intermediate diaphragm-free beam bridge according to the present invention;
FIG. 4 is a schematic diagram showing the calculation of the most unfavorable transverse stress on the top surface of the deck slab of the intermediate diaphragm-free beam bridge of the present invention;
FIG. 5 is a schematic diagram of calculating the equivalent curvature radius *R*_{eq} of the deck slab in the present invention;
FIG. 6 is a schematic diagram showing the longitudinal section of the intermediate diaphragm-free, suspended formwork-free, and negative moment tooth block-free beam bridge according to the present invention;
FIG. 7 is a schematic diagram showing the cross section of the intermediate diaphragm-free, suspended formwork-free, and negative moment tooth block-free beam bridge according to the present invention;
FIG. 8 is a schematic diagram showing the cross section of an intermediate diaphragm-free and suspended formwork-free beam bridge adopting a honeycomb deck slab in Example B1;
FIG. 9 is a schematic diagram showing the cross section of an intermediate diaphragm-free and suspended formwork-free beam bridge adopting a thick-joint deck slab in Example B2;
FIG. 10 is a schematic diagram showing the cross section of an intermediate diaphragm-free and suspended formwork-free beam bridge adopting a transverse-rib-type deck slab in Example B3;
FIG. 11 is a shell-solid finite element model of a conventional T-beam bridge in Example C;
FIG. 12 is a diagram showing the transverse stress distribution on the top surface of the deck slab of the conventional T-beam bridge in Example C, where the unit is MPa;
FIG. 13 is a diagram showing the transverse stress on the top surface of the deck slab of a conventional intermediate diaphragm-free T-beam bridge in Example C, where the unit is MPa;
FIG. 14 is a Hambly grillage method finite element model of the conventional intermediate diaphragm-free T-beam bridge in Example C;
FIG. 15 is a non-uniform deflection of each prefabricated main girder of the conventional intermediate diaphragm-free T-beam bridge in Example C, where the unit is mm;
FIG. 16 is a diagram showing the maximum transverse stress on the upper edge of the joint interface of the intermediate diaphragm-free T-beam bridge in Example C, designed with solid deck slabs of different thicknesses;
FIG. 17 is a diagram showing the maximum longitudinal bending moment of the prefabricated main girders of the intermediate diaphragm-free T-beam bridge in Example C, designed with solid deck slabs of different thicknesses;
FIG. 18 is a shell-solid finite element model and calculation results of the intermediate diaphragm-free T-beam bridge adopting a honeycomb deck slab in Example C;
FIG. 19 is a diagram showing the maximum transverse distribution factor of the prefabricated main girder under different bridge configurations in Example C;
FIG. 20 is a photograph of a scaled test specimen of the conventional T-beam bridge in Example C;
FIG. 21 is a photo of a scaled test specimen of the intermediate diaphragm-free T-beam bridge adopting a honeycomb deck slab in Example C;
FIG. 22 is a photograph of a full-scale segment specimen of the intermediate diaphragm-free T-beam bridge adopting a honeycomb deck slab in Example C; and
FIG. 23 is a photograph of a full-scale segment specimen of the conventional T-beam bridge in Example C.

Reference signs are as follows:
1. prefabricated main girder; 11. web; 111. web vertical rib; 12. concrete deck slab; 121: cantilever slab; 122. cushion plate; 123. deck slab hole; 124. deck slab transverse rib; 125. end thickened part; 1251. end bevel; 1252. bevel surface of thickened part; 1253. plane surface of thickened part; 126. non-arched deck slab cross-section upper edge; 127. arched deck slab cross-section upper edge; 13. bottom slab; 14. intermediate diaphragm wet joint zone;
2. wet joint; 21. joint interface;
3. pier cap beam; 31. intermediate diaphragm; 4. lower structure;
5. negative bending moment tendon; 51. anchoring groove; 52. negative bending moment tooth block; and P. wheel load.

### Detailed Description of Embodiments

The present invention is further described in detail below in conjunction with test examples and detailed implementations. However, this should not be understood as the scope of the above subject matter of the present invention being limited to the following examples, and all technologies realized based on the content of the present invention belong to the scope of the present invention.

### Example A

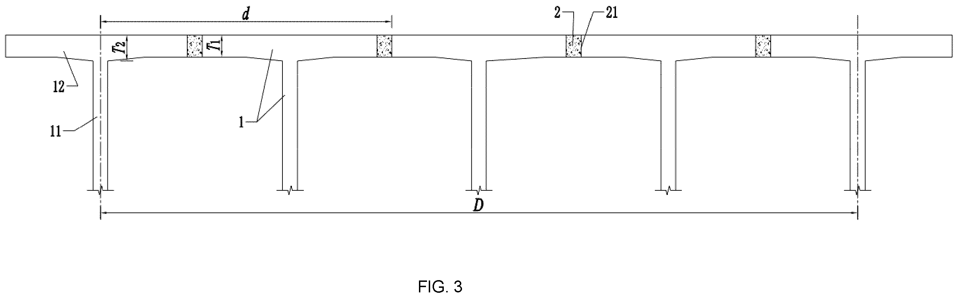

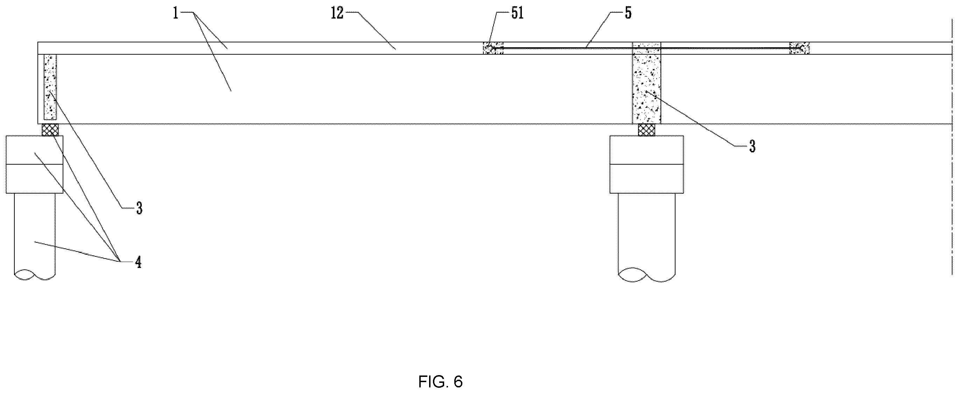

As shown in FIGS. 3 to 7, the present invention provides a design method for an intermediate diaphragm-free, suspended formwork-free, and negative moment tooth block-free beam bridge. The design method for the intermediate diaphragm-free, suspended formwork-free, and negative moment tooth block-free beam bridge includes the following steps S1 to S6:
At step S1, design of initial structural parameters of prefabricated main girders 1: based on the statistical data of structural dimensions of built beam bridges, a sectional form, maximum span L, and sectional inertia moment / of the prefabricated main girders 1 are assumed; the thickness of the concrete deck slab 12 at joint interfaces 21 is assumed to be *T*₁, the thickness of the concrete deck slabs 12 at webs 11 is assumed to be *T*₂, and the number of prefabricated main girders 1 arranged in the transverse direction of the beam bridge is assumed to be J; the webs 11 are numbered from left to right in the transverse direction as 1st, 2nd, 3rd,..., (N-1)th, and Nth, and a transverse distance between center lines of the webs 11 at both ends of the beam bridge in the transverse direction is D;
At step S2, calculation of indirect transverse stress of concrete deck slabs 12: according to the actual support situation, load is set at the outermost part in the transverse direction of the beam bridge, and non-uniform deflection {△*ₙ*} of the prefabricated main girders 1 is calculated, and {*△ₙ*}*=*{*△*₁,△₂,△₃,*... ,*△_{*N*-1}*,*△*_{N}*}*,* where △₁, △₂, △₃,... *,*△_{*N-*1}*,* and △*_{N}* are the vertical deflections of the 1st, 2nd, 3rd,..., (N-1)th, and Nth webs 11 respectively; a segment is taken along the longitudinal direction of the beam bridge, the bottom parts of the webs 11 in the segment is assumed to be vertically rigidly supported, and forced displacements △₁, △₂, △₃,... , △_{*N-*1}, and △*_{N}* are applied to the bottom parts of the 1st, 2nd, 3rd,..., (N-1)th, and Nth webs 11, and the indirect transverse stress σ_{b1} on the top surface of the concrete deck slabs 12 at this moment is calculated;
At step S3, calculation of direct transverse stress of concrete deck slabs 12: the bottom parts of the webs 11 are assumed to be vertically rigidly supported, the load is set at the outermost part of the beam bridge in the transverse direction, and the direct transverse stress σ_{b2} on the top surface of concrete deck slabs 12 is calculated;
At step S4, crack resistance calculation of the concrete deck slab 12: the most unfavorable transverse stress σ_{b} on the top surface of the concrete deck slab 12 is calculated as the superposition of the indirect transverse stress σ_{b1} and the direct transverse stress σ_{b2}, that is, σ_{b} = σ_{b1}+σ_{b2};
if σ_{b}≥ *f*ₜⱼₚ at the joint interface 21, where *f*ₜⱼₚ is the fatigue tensile strength at the joint interface 21, then proceed to step S5; and
if σ_{b}<*f*ₜⱼₚ at the joint interface 21, then proceed to step S6;
At step S5, *T*₁ and/or *T*₂ and/or J and/or / is increased, and/or L is reduced, return to step S2, and crack resistance calculation of the concrete deck slab 12 is performed again; and
At step S6, completion of the remaining design according to the conventional method: multi-lane, multi-vehicle live loads and other design load are applied in the conventional influence line approach, the configuration of rebars and steel tendons in the prefabricated main girder 1 is determined based on the most unfavorable full-bridge internal force state under the design load combination and the conventional structural design method to complete the beam bridge design.

Based on the above design method, the present invention proposes an intermediate diaphragm-free, suspended formwork-free, and negative moment tooth block-free beam bridge, which includes prefabricated main girders 1, wet joints 2, pier cap beams 3 and lower structures 4. Adjacent prefabricated main girders 1 are connected by a wet joint 2, the pier cap beams 3 are arranged below the prefabricated main girders 1, and the pier cap beams 3 are arranged above the respective lower structures 4. Each prefabricated main girder 1 includes a web 11 and a concrete deck slab 12, adjacent concrete deck slabs 12 are connected by the wet joint 2, the contact surface between the concrete deck slab 12 and the wet joint 2 is a joint interface 21, and the web 11 and the concrete deck slab 12 are integrally formed.

In this example, the present invention takes into account during the design process that the beam bridge will have significant non-uniform deflection without intermediate diaphragms 31. Therefore, the indirect tensile stress σ_{b1} and the direct tensile stress σ_{b2} at the upper edge of the joint interface 21 of the beam bridge are superimposed to verify the crack resistance of the top surface of the deck slab, so as to avoid cracking of the driving surface of the beam bridge in operation. In the design process according to the existing technology, when calculations are carried out for a beam bridge without intermediate diaphragms 31, designers did not take into account that the significant variation in the vertical deflection differences between adjacent prefabricated main girders 1 of the beam bridge without intermediate diaphragms 31 when a load is applied, and each prefabricated main girder 1 will undergo a non-uniform deflection, and the non-uniform deflection of the prefabricated main girder 1 will usually cause the deck slab of the beam bridge to have a larger curvature and a relatively arched deformation, thereby causing indirect tensile stress in the transverse direction of the bridge at the joint interface 21 of the deck slab. The superposition of the indirect tensile stress and the direct tensile stress caused by the direct action of the load causes the emergence of a large number of longitudinal cracks on the driving surface of the existing beam bridge without intermediate diaphragms 31 during operation. In the existing design, the designers did not consider that, with the existence of indirect tensile stress, when the load was eccentrically loaded on the outermost side in the design of the beam bridge without the intermediate diaphragm 31, each prefabricated main girder 1 would generate deflection and the deflection values △₁, △₂, △₃, ... , △_{*N*-1}, and △*_{N}* were different. However, when the intermediate diaphragm 31 existed, the vertical deflection difference between each prefabricated main girder 1 and the adjacent prefabricated main girder 1 was substantially the same (△₁*-△*₂≈△₂*-*△₃≈*...≈*△_{*N*-1}*-*△*_{N}*)*,* that is, the shape of the top surface of the deck slab after deflection was still close to a plane, while the vertical deflection differences without intermediate diaphragms 31 would vary significantly, namely, there would be a significant non-uniform deflection {△*ₙ*}. Therefore, without considering the indirect tensile stress σ_{b1} caused by non-uniform deflection, the *f*ₜⱼₚ , namely the fatigue tensile strength, at the joint interface 21 of the existing beam bridge without intermediate diaphragms 31, is not sufficient to resist the most unfavorable transverse stress σ_{b} on the top surface of its deck slab, because the σ_{b} is actually the superposition of the indirect tensile stress σ_{b1} caused by the non-uniform deflection and the direct tensile stress σ_{b2} caused by the transverse bending moment generated when the load is applied directly.

In the design method proposed by the present invention, the indirect tensile stress σ_{b1} caused by the non-uniform deflection is taken into account, by increasing *T*₁ and/or *T*₂ and/or J and/or / and/or by reducing L, the tensile stress at the joint interface 21 of the beam bridge is reduced, and σ_{b} is kept at a level lower than *fₜⱼₚ,* thereby avoiding longitudinal cracking of the deck slab due to σ_{b} being too large compared to the fatigue tensile strength of the beam bridge. The design scheme proposed by the present invention clarifies the non-uniform deflection effect of the beam bridge without the intermediate diaphragm 31, and defines the most unfavorable transverse stress of the deck slab of the beam bridge without the intermediate diaphragm 31, which is the superposition of the indirect tensile stress σ_{b1} under the non-uniform deflection effect and the direct tensile stress σ_{b2} under the direct action of the vehicle load. The most unfavorable value appears at the upper edge of the deck slab joint interface 21, the present invention provides the crack resistance verification method of the top surface of the deck slab of this type of bridge. Ultimately, by controlling the most unfavorable transverse stress σ_{b} of the deck slab of the beam bridge without intermediate diaphragms 31 below the fatigue tensile strength *f*ₜⱼₚ at the concrete joint interface 21, the safety and reliability of the structural design is ensured, thereby effectively avoiding longitudinal cracking of the driving surface at the joint of the beam bridge without intermediate diaphragms 31 that may be caused by the design according to the existing technology. This facilitates the practical design and promotion and application of this type of bridge.

Furthermore, the load in step S2 is set at the leftmost side of the transverse direction of the beam bridge within the scope of the specification requirements, and the load in step S3 is set at the leftmost side of the transverse direction of the beam bridge within the scope of the specification requirements. In this implementation, when the beam bridge is applied to bridge construction in different countries or regions, the corresponding local standards are adopted based on regional regulations. When the load is placed at the leftmost position, its specific placement is adaptively adjusted according to the requirements of the respective regional standards.

In a preferred implementation, referring to FIG. 5, σ_{b1} in step S2 is such that σ_{b1}= *M*_{b1}/*W*_{b}*,* taking the cross section of the concrete deck slab 12 with a longitudinal width of a₀ as an example, *W_{b}* is the section modulus of the section of the concrete deck slab 12 with a longitudinal width of a₀, and *M*_{b1} is the indirect transverse bending moment of the section of the concrete deck slab 12 with a longitudinal width of a₀; *M*_{b1} = *M*_{b1max} *d_{y}*/(*D*/2)*,* where *d_{y}* is the transverse distance of the section from the center line of the leftmost web 11; *M*_{b1max} = *E*_{c}/_{bmax}/*R*_{eq}, *I*_{bmax} = a₀ · [max(*T*₁, *T*₂)]³/12, where *E*_{c} is the elastic modulus of the concrete deck slab 12, and *R*_{eq} is the equivalent radius of curvature of the concrete deck slab 12 under the forced displacement of △₁, △₂, △₃, ..., △_{*N*-1}, and △*_{N}*; and *R*_{eq} =(*D*/2)²/(2△_{g}), where △_{g} is the relative camber. Therefore, when N is an odd number, △_{g} = △_{(*N+*1)/2}-(△₁*+*△*_{N}*)/2, and when N is an even number, △_{g} = (△_{*N*/2}*+*△_{*N*/2+1})/2-(△₁*+*△*_{N})*/2*.*

In this implementation, the non-uniform deflection produced by each prefabricated main girder 1 causes the deck slab of the beam bridge to produce a relatively arched deformation, so the indirect transverse stress σ_{b1} on the concrete deck slab 12 is positively correlated with the curvature of the deck slab. Therefore, combined with the calculation diagram of the equivalent curvature radius *R*_{eq} of the deck slab in FIG. 5, it can be known that because the deformation of the bridge structure in practical operation is still a small deformation, it is assumed that the upper edge 126 of the cross-section of the deck slab without arching is a plane, and the upper edge 127 of the cross-section of the deck slab with arching is an arc, so the curvature radius of the arc *R*_{eq}=(*D*/2)/sin*β*, according to the small angle approximation principle, sin*β*≈*β;* further according to the chord tangent angle theorem, *β*=2*α,* according to the theorem of equal alternate angles in parallel lines, *α=θ;* finally, according to the small angle approximation principle, θ≈tan*θ=*△_{g}/(*D*/2), and the above formulas can be combined to prove that *R*_{eq}=(*D*/2)²/(2△_{g}). Additionally, because the deformation of the deck slab belongs to the category of small displacement theory, the relative camber Δ_{g} ≈ the vertical deflection of the deck slab at the transverse centerline of the whole bridge - the average of the vertical deflections of the 1st and Nth webs 11.

Further, in step S2, the non-uniform deflection {△*ₙ*}={*mₙ*}*w,* where w is the vertical deflection generated when assuming one of the prefabricated main girders 1 of the beam bridge bears the load in step S2 alone; {*mₙ*} is the set of load transverse distribution factors of all prefabricated main girders 1 when loaded according to step S2, {*mₙ*} is calculated according to the conventional rigidly connected plate method, and the equivalent moment of inertia of the longitudinal unit-width deck slab in the rigidly connected plate method is *I*_{beq} = *F(D*/*(N-*1))³/(48*E*_{c}*w*_{eq}), where *E*_{c} is the elastic modulus of the concrete deck slab 12, *F* is the unit force, and *w*_{eq} is the equivalent flexibility. The *w*_{eq} is calculated as follows: the concrete deck slab 12 between the center lines of the 1st and 2nd webs 11 is assumed to be a simply supported beam supported at the web 11, and the mid-span vertical deflection calculated by conventional structural mechanics methods or finite element modeling when *F* is applied at the mid-span of the simply supported beam is *w*_{eq}.

In this implementation, when calculating the non-uniform deflection {△*ₙ*} generated by each prefabricated main girder 1, the calculation error of the transverse distribution factor generally has little effect on the calculation of the longitudinal force of the prefabricated main girder 1, but has a great influence on the calculation of the indirect transverse stress σ_{b1} of the deck slab of the beam bridge without intermediate diaphragms 31; and the stiffness of the deck slab in practice often varies along the transverse bridge direction, whereas the stiffness of the deck slab calculated by the conventional rigidly connected plate method can only be considered as a constant value, which will undoubtedly bring a large error in the design process. Therefore, in the design method provided by the present invention, the equivalent moment of inertia *I*_{beq} is calculated by approximating the variable-stiffness bridge deck as an equivalent constant-stiffness bridge deck, on the basis that the displacement under a unit force remains equal. This equivalent moment of inertia is then applied in the rigidly connected plate method to compute the load transverse distribution factor set for all prefabricated girders, so as to reduce the calculation error of the non-uniform deflection in the design process and further improve the calculation accuracy of the non-uniform deflection in the design method.

In another implementation, the non-uniform deflection {△*ₙ*} in step S2 may be calculated by establishing a full-bridge finite element model according to the conventional Hambly grillage method, where the width of the virtual transverse beam in the model is the actual working width a of the concrete deck slab 12 in the longitudinal direction of the bridge, a= max{(a₁ +2*h*ₚ)+ *D*/*(N-1)*/*3,* 2D/(N-1)/3}, where *a*₁ is the longitudinal contact dimension of the heaviest wheel of the vehicle load, and *h*ₚ is the total thickness of the leveling layer and the pavement layer above the concrete deck slab 12; a single car or train load is set to the leftmost side to calculate the non-uniform deflection {△*ₙ*} of the prefabricated main girder 1.

In this implementation, when the vehicle or train load is applied as a lane load, the concentrated force of the lane load is significantly large, while the actual wheel load P is a distributed force with a certain width and will spread to the deck slab within a certain range in the longitudinal direction of the bridge. This results in a large difference between the deformation and stress of the virtual transverse beam in the conventional Hambly grillage method under the concentrated lane load and the actual situation. Considering that the calculation error of the vertical deflection has a great influence on the indirect transverse stress σ_{b1} of the deck slab of the beam bridge without the intermediate diaphragm 31, when the grillage method is used to model the beam bridge without the intermediate diaphragm 31, the width of the virtual transverse beam in the model is the actual longitudinal working width a of the deck slab, which can effectively reduce the calculation errors of the vertical deflection and the deck slab stress.

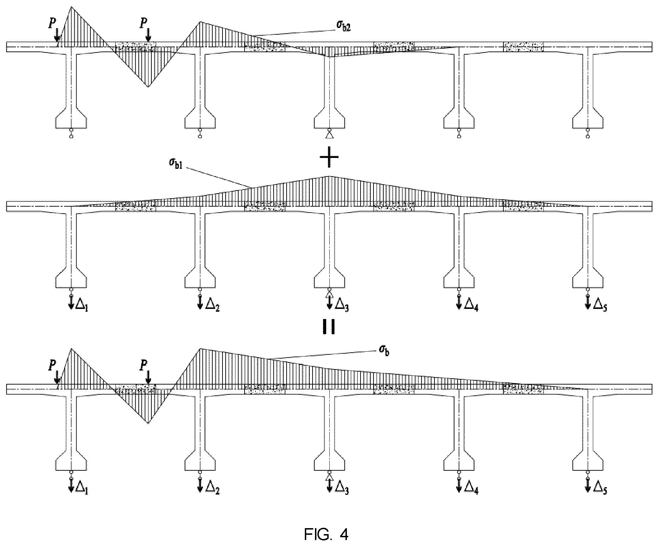

Further, as shown in FIG. 4, a segment with a longitudinal width of a₀ is taken at the longitudinal mid-span of the beam bridge, and the bottom parts of the webs 11 in the segment are assumed to be vertically rigidly supported. The heaviest axis of a single vehicle or train load is set at the leftmost side of the segment, and the transverse upper edge stress σ_{b22} at each section of the segment is calculated according to conventional structural mechanics methods or finite element modeling; σ_{b2} at each section in step S3 is such that σ_{b2}=σ_{b22}a₀/a*ₙ*, when the section is located between the Nth web 11 and the (N+1)th web 11, *a*ₙ = min{(*a*₁+2*h*ₚ)+*D*/(*N*-1)/3, 2D/(N-1)/3}+(n-1)D/(N-1)/3, otherwise *a*ₙ=(*a*₁+2*h*ₚ)+2*d*_{c}, where *a*₁ is the longitudinal contact dimension of the heaviest wheel of the vehicle load, and *h*ₚ is the total thickness of the leveling layer and the pavement layer above the concrete deck slab 12, *d*_{c} is the distance from the leftmost edge of the leftmost-wheel contact area of the vehicle load to the center line of the leftmost web 11.

In this implementation, under the actual load-bearing condition of the entire bridge, when the vehicle load is positioned between the 1st web 11 and the 2nd web 11, the width of the bridge deck that actually bears the vehicle load between these two webs 11 along the longitudinal bridge direction is *a*ₙ, and the effect of the vehicle load diffuses to between the 2nd web 11 and the 3rd web 11, so that the longitudinal width of the deck slab that actually bears the vehicle load will be further enlarged. The same can be applied to the section located between the Nth web 11 and the (N+1)th web 11. Therefore, the above formulas may be applied based on the geometric relationship that the diffusion is at a 45° angle and safety considerations. Furthermore, in step S4, only σ_{b} at the mid-span position at the maximum span of the concrete deck slab 12 in the longitudinal direction is calculated, and only the joint interface 21 at a distance d from the center line of the leftmost web 11 is examined for crack resistance; when J is an odd number, d is the distance from the center line of the leftmost web 11 in the transverse direction to the left joint interface 21 of the (J+1)/2-th prefabricated main girder 1; and when *J* is an even number, *d* is the distance from the center line of the leftmost web 11 in the transverse direction to the right joint interface 21 of the J/2-th prefabricated main girder 1. In this implementation, the mid-span deflection at the maximum span in the longitudinal direction is the maximum vertical deflection of the whole bridge. Here, the non-uniform deflection effect between the prefabricated main girders 1 is also the most significant, that is, the most unfavorable transverse stress σ_{b} on the top surface of the concrete deck slab 12 of the beam bridge normally appears at the mid-span position at the maximum span in the longitudinal direction of the beam bridge, that is, it is only necessary to keep the σ_{b} at the mid-span position at the maximum span in the longitudinal direction of the concrete deck slab 12 at a smaller value. In addition, the maximum bending moment of the deck slab caused by the non-uniform deflection normally appears at the transverse centerline of the whole bridge in the transverse direction and decreases towards both sides, so it is only necessary to verify the joint interface closest to this position, that is, the joint interface 21 at a distance d from the centerline of the leftmost web 11. Therefore, by merely ensuring that the joint interface closest to the transverse centerline at the mid-span position of the concrete deck slab 12 in the longitudinal direction is such that σ_{b} < *fₜⱼₚ,* the common longitudinal cracking when designed according to the existing technology can be avoided in the beam bridge without intermediate diaphragms 31 during operation.

In a preferred implementation, *f*ₜⱼₚ in step S4 is such that *f*ₜⱼₚ =γⱼγₚ·min(*f*_{ty}, *f*ₜⱼ), where *f*_{ty} is the designed tensile strength of the concrete of the prefabricated main girder 1, *f*ₜⱼ is the designed tensile strength of the concrete of the wet joint 2, *γ*ⱼ is the concrete tensile strength correction coefficient at the joint interface 21, and *γ*ₚ is the concrete fatigue tensile strength correction coefficient.

In this implementation, due to the presence of a transition layer with a high water-cement ratio at the interface between the new and old concrete, a porous cement mortar matrix will be easily formed, and the initial damage of the old concrete during roughening and the shrinkage stress of the new concrete also affect the stress performance at this interface, so the tensile strength of the concrete at the joint interface 21 should be reduced accordingly. Additionally, considering that the bridge bears long-duration live loads and the stress of the deck slab fluctuates repeatedly between tension and compression, the fatigue effect should be considered to further correct the tensile strength of the concrete. Generally, the tensile strength correction coefficient of the concrete at the joint interface 21 is γⱼ=0.49, and the fatigue tensile strength correction coefficient of the concrete is γₚ=0.6, so that the safety of the beam bridge during operation can be ensured, and the preset fatigue tensile strength at the joint interface 21 of the concrete deck slab 12 can be avoided from being too high, and the longitudinal cracks that appear on the driving surface of the conventional T-beam bridge without intermediate diaphragms 31 will be further ensured during operation of the beam bridge.

### Example B

Referring to FIGS. 3 to 10, based on the above-mentioned design method of an intermediate diaphragm-free, suspended formwork-free, and negative moment tooth block-free beam bridge, the present invention further provides an intermediate diaphragm-free, suspended formwork-free, and negative moment tooth block-free beam bridge, which includes prefabricated main girders 1, wet joints 2, pier cap beams 3 and lower structures 4. Adjacent prefabricated main girders are connected by the wet joints, the pier cap beams are respectively arranged below the prefabricated main girders and above the lower structures. **The** prefabricated main girders each include a web 11 and a concrete deck slab 12, adjacent concrete deck slabs are connected by the wet joints, the contact surface between the concrete deck slab and the wet joint is a joint interface 21, and the web and the concrete deck slab are integrally formed.

In this implementation, by eliminating the transverse diaphragm outside the pier cap, the problem of high-altitude suspension construction at wet joint zones 14 of numerous intermediate diaphragms 31 in conventional prefabricated beam bridges is avoided, which greatly enhances construction safety, reduces on-site work volume, and significantly improves assembly construction efficiency. Moreover, compared with a conventional beam bridge with an intermediate diaphragm 31, the present beam bridge eliminates a large number of dense intermediate diaphragms 31, and has better permeability and appearance along the bridge direction than the conventional prefabricated beam bridges.

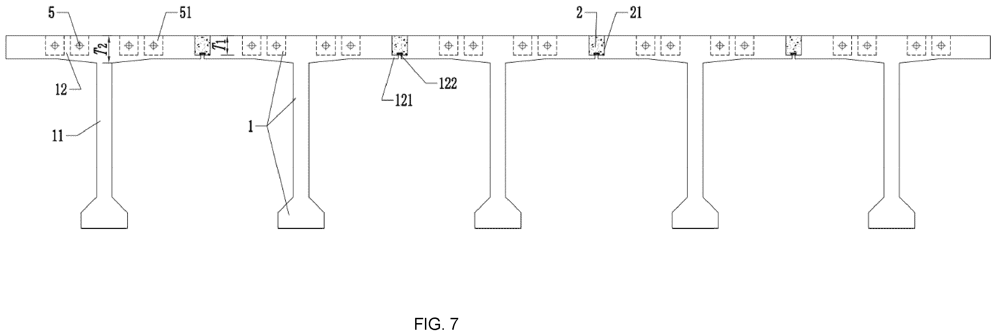

As shown in FIG. 7, a cantilever slab 121 is provided at a transverse end of each prefabricated main girder 1, and the transverse net distance of the cantilever slabs 121 between adjacent prefabricated main girders 1 does not exceed 60 cm. A cushion plate 122 is provided above the cantilever slab 121, and the cushion plate 122 is connected to the wet joint 2 to form an integrated load-bearing structure.

In this implementation, the design of the beam bridge without intermediate diaphragms 31 does not require personnel to go up and down from the deck slab joint to apply the intermediate diaphragms 31 during the construction of the beam bridge. Therefore, the cantilever slab 121 can be preset and only a small clearance can be left between the adjacent prefabricated main girders 1, thereby greatly reducing the amount of cast-in-place engineering of the wet joints 2, avoiding the performance waste caused by the concrete of the wet joints 2 being unable to bear their own wet weight, and the prefabricated main girders 1 of the beam bridge without the intermediate diaphragm 31 can have a large bending stiffness under the same amount of concrete, thereby reducing the amount of steel used in the construction process and improving economy. Moreover, placing small pieces of cushion plates 122 correspondingly above the cantilever slabs 121 can form protection on the prefabricated main girders 1 and serve as a permanent bottom formwork, enabling the rebar connection and cast-in-place operation of the wet joints 2, and the cushion plates 122 can also be prefabricated with concrete materials and form an integrated structure with the concrete of the wet joints 2, so as to bear the force together, this not only saves the volume of engineering, but also avoids the waste of material performance, and further improves the practicality of the beam bridge. Since the beam bridge does not need to have personnel go up and down from the deck slab joint to construct the intermediate diaphragms 31 and the negative bending moment tendons 5, the width of the wet joints 2 can be designed to be as narrow as possible, furthermore, the cantilever slabs 121 are set at the transverse end of the concrete deck slabs 12 in the prefabricated main girders 1, together with the small-sized cushion plates 122 above, a complete elimination of formwork suspension and formwork removal operations of the entire bridge is achieved. Therefore, the beam bridge can avoid the problem of extensive formworks required for pouring and removing the wet joints 2 of the deck slab of conventional prefabricated beam bridges, and has a smaller amount of cast-in-place concrete, thereby greatly saving the construction cost of wet joints 2, and significantly improving the efficiency of assembly construction.

In a preferred implementation, the prefabricated main girder 1 further includes a negative bending moment tendon 5 and an anchoring groove 51. **The** number of the prefabricated main girders 1 is no less than two in the longitudinal bridge direction, and adjacent prefabricated main girders 1 in the longitudinal bridge direction are connected by the negative bending moment tendon 5, and min(*T*₁, *T*₂)≥20 cm. **The** anchoring groove 51 is preset in the concrete deck slab 12, and the negative bending moment tendon 5 is anchored in the anchoring groove 51.

In this implementation, with the design of the beam bridge without intermediate diaphragms 31, there is no need for personnel to go up and down from the deck slab joints for threading, tensioning and anchoring of the negative bending moment tendon 5. **The** thickness of the deck slab of the beam bridge without the intermediate diaphragm 31 is thicker than that of a conventional prefabricated beam bridge. Therefore, it is possible to operate directly above the deck slab to anchor the negative bending moment tendon 5 in the reserved groove in the thicker deck slab, thereby realizing the structural design without a negative bending moment tooth block 52. By directly anchoring the negative bending moment tendon 5 in the thicker deck slab, there is no need to set a large number of tooth blocks under the deck slab for prestressed tensioning and anchoring, thus avoiding extensive high-altitude suspension tensioning operations of the negative bending moment tendon 5 of the conventional prefabricated beam bridge, thereby greatly enhancing the construction safety, saving the construction cost of suspension, significantly saving labor hours for tensioning, improving the space and working environment of prestressed tensioning operation, and ensuring a better construction quality.

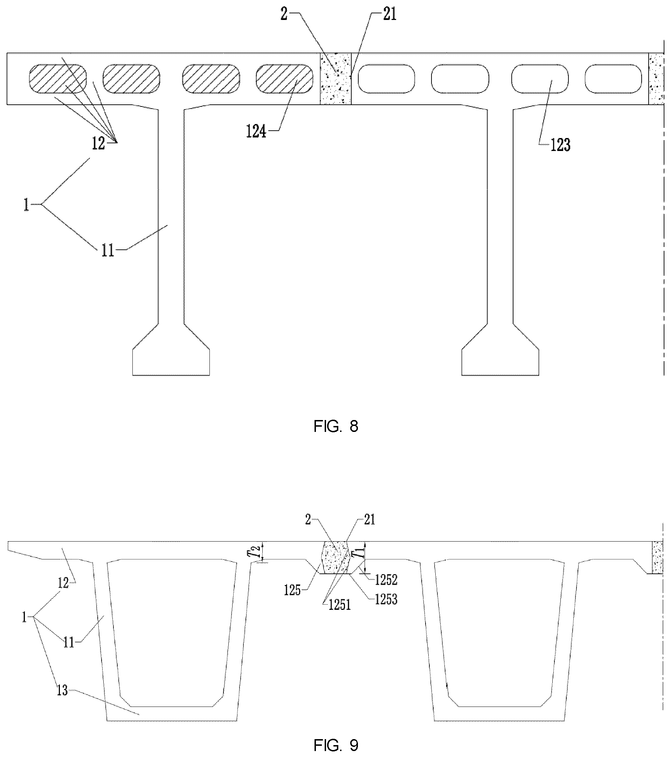

Example B1-Honeycomb Deck Slab: as shown in FIG. 8, the present invention provides a honeycomb deck slab structure, wherein the prefabricated main girder 1 further includes deck slab transverse ribs 124, the concrete deck slab 12 is provided with evenly spaced deck slab holes 123 in both the longitudinal and transverse directions, and deck slab transverse ribs 124 are provided between longitudinally adjacent deck slab holes 123, and the deck slab transverse ribs 124 are provided with shear reinforcement bars spaced apart along the transverse direction.

In this example, the evenly spaced deck slab holes 123 enable the beam bridge to significantly improve the stiffness of the deck slab without increasing the dead load, thereby reducing the non-uniform deflection effect and the tensile stress on the top surface of the deck slab, while significantly reducing the amount of transverse steel reinforcement in the deck slab. **The** deck slab transverse ribs 124 are provided between the longitudinally adjacent deck slab holes 123. **The** deck slab transverse ribs 124 and a portion of deck slab near the deck slab holes 123 form an I-shaped section to jointly bear the wheel load. **The** deck slab reinforcement may be designed according to the conventional I-shaped section beam. Compared with the stress state of the deck slab as a rigid truss when there are no deck slab transverse ribs 124, the calculation and reinforcement workload of the deck slab reinforcement can be significantly simplified.

Example B2-Thick-joint Deck Slab: in a preferred example, referring to FIG. 9, the present invention provides a thick-joint deck slab structure. **The** prefabricated main girder 1 further includes a closed box-section structure, in which a bottom slab 13 is provided at the bottom of the webs 11, the bottom slab 13, the webs 11 and the concrete deck slab 12 form a closed box-section structure, and an end thickened part 125 is provided at the transverse end of the concrete deck slab 12 and is connected to the wet joint 2. An end bevel 1251 is provided at the transverse end of the concrete deck slab 12, and the end thickened part 125 includes a bevel surface of thickened part 1252 and a plane surface of thickened part 1253, the bevel surface of thickened part 1252 is connected to the wet joint 2, the slope of the bevel surface of thickened part 1252 is not greater than 1.00, and *T*₁> *T*₂.

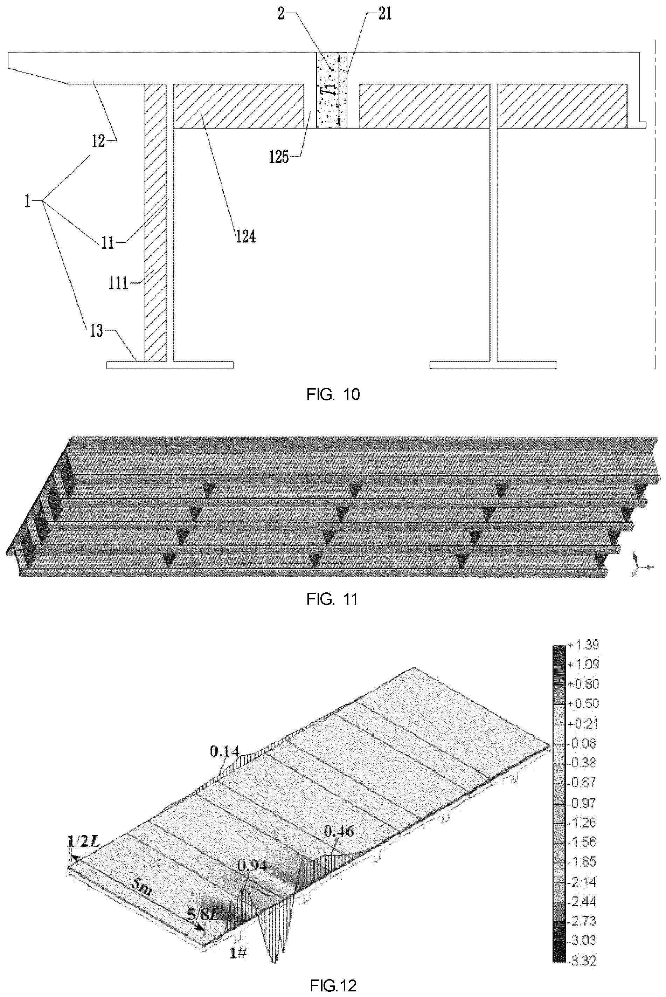

In this example, the joint interface 21 is thickened, while the non-uniform deflection effect is not significantly reduced. Because the cross-sectional stiffness and thickness are close to a cubic relationship, the bending stiffness of the section at this location is significantly increased, thereby significantly reducing the tensile stress at the joint interface 21. With the end bevel 1251, the shear stiffness and shear bearing capacity of the new-old concrete joint interface 21 can be significantly improved, and the upward development of the cracks at the lower edge of the interface can be blocked to a certain extent. When the slope of the bevel surface of thickened part 1252 is not greater than 1.00, it is beneficial to the transmission of the transverse stress of the deck slab and reduce the influence of stress concentration. Example B3-Transverse-rib-type Deck Slab: referring to FIG. 10, the present invention provides a transverse-rib-type deck slab structure, in which a bottom slab 13 is provided at the bottom of the web 11, an end thickened part 125 is provided at a transverse end of the concrete deck slab 12, and a deck slab transverse rib 124 is provided between the web 11 and the end thickened part 125. The deck slab transverse rib 124 is located below the concrete deck slab 12 and is arranged at intervals along the longitudinal direction of the concrete deck slab 12. The concrete deck slab 12 is connected to the deck slab transverse rib 124, and the thickness *T*₁ of the concrete deck slab 12 at the joint interface 21 includes the sectional thickness of the concrete deck slab 12 and the sectional thickness of the deck slab transverse rib 124, and the thickness *T*₁ ≥30 cm.

In this example, the design of the transverse-rib-type deck slab allows the deck slab and the transverse ribs below to form a T-shaped section. As the section height increases, its stiffness increases nearly cubically, which can significantly reduce the non-uniform deflection effect. Furthermore, the tensile stress at the joint interface 21 can be reduced by significantly increasing the bending stiffness.

Furthermore, in a preferred embodiment, the web 11 includes a steel structure, and the side surface of the web 11 is provided with web vertical ribs 111 arranged at intervals along the longitudinal direction of the beam bridge, and the top ends of the web vertical ribs 111 are connected to the deck slab. The web vertical ribs 111 and the deck slab transverse ribs 124 are at the same positions over the longitudinal bridge direction to resist the transverse deformation transmitted by the deck slab transverse ribs 124.

In this embodiment, when the web 11 of the prefabricated main girder 1 is a steel structure, the deformation transmitted from the deck slab transverse ribs 124 will significantly reduce the local stability of the web 11, so the web vertical ribs 111 are correspondingly arranged to offset the adverse effects caused by the deck slab transverse ribs 124.

### Example C

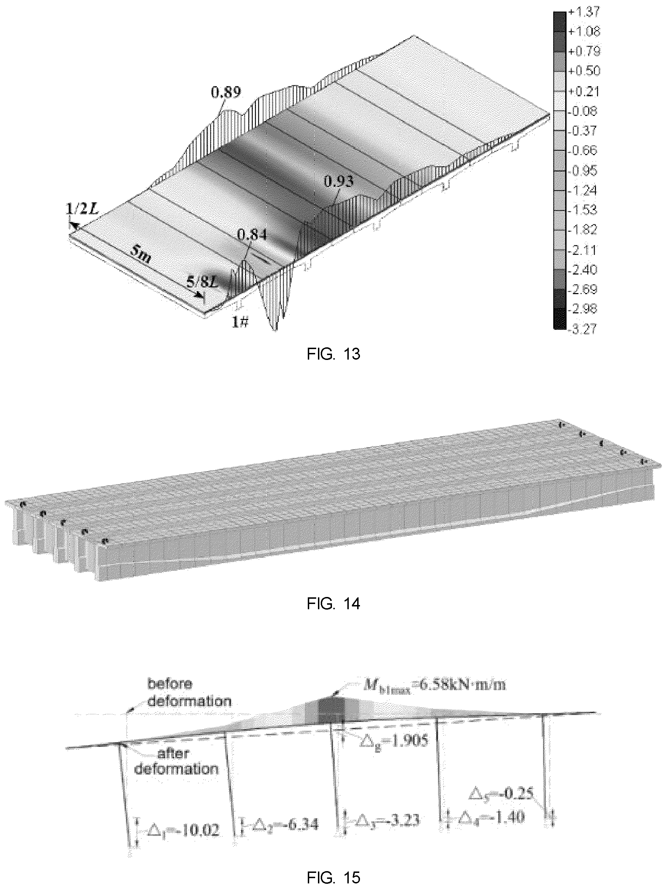

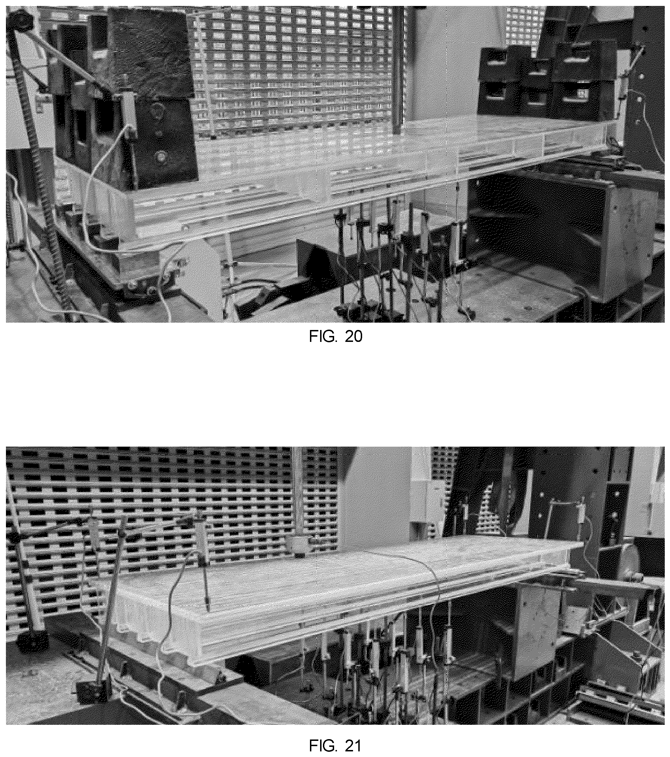

To verify the technical effect of the present invention, a prefabricated prestressed concrete simply supported T-beam bridge (referred to as conventional T-beam bridge, cross-sectional structure thereof as shown in FIG. 2) with a span of 40 m and a bridge width of 12.75 m, which is currently commonly used in China's highway bridges, is taken as an example. The conventional T-beam bridge is provided with an intermediate diaphragm 31 at 1/2 *L,* 3/8 L and 5/8 L, respectively, with a single span having a total of 3 intermediate diaphragms 31. The number of prefabricated main girders 1 arranged in the transverse direction of the conventional T-beam bridge is J=5, and the webs 11 are numbered as the 1st, 2nd, 3rd, 4th and 5th from left to right in the transverse direction, and the corresponding prefabricated main girders 1 are also numbered as the 1st, 2nd, 3rd, 4th and 5th in sequence. The prefabricated main girders 1 and the wet joints 2 are both made of concrete with a strength grade of C50, and the design value of tensile strength *f*_{ty} = *f*ₜⱼ = 1.83 MPa. The height of each prefabricated main girder 1 is 2.5 m, and the transverse distance between the center lines of the leftmost web 11 and the rightmost web 11 is 4×2.55=10.2 m. The thickness of the deck slab at the joint interfaces 21 of the conventional T-beam bridge is *T*₁ = 0.2 m, and the thickness of the deck slab at the webs 11 is *T*₂ = 0.25 m. The width of each wet joint 2 is 0.8 m, and the thickness of the webs 11 is 0.2 m. The refined shell-solid finite element model of the whole bridge of the conventional T-beam bridge is established as shown in FIG. 11. As shown in FIG. 20, the refined shell-solid finite element model of the whole bridge of the conventional T-beam bridge was calibrated using a scaled test specimen, so that the errors of various force and deformation indicators of the two are within 5%. Then, a single highway Class I vehicle load is arranged on the leftmost side in the transverse direction and at a point where the vertical deflection of the whole bridge is maximum in the longitudinal direction. The transverse stress on the top surface of the deck slab in a range of 1/2L to 5/8L in the longitudinal direction is calculated as shown in FIG. 12. It can be seen that the maximum tensile stress at the upper edge of the joint interface 21 is σ_{b}⁽³⁾ =0.46 MPa<*f*ₜⱼₚ=γⱼγₚ· min(*f*_{ty} *f*ₜⱼ) =0.49×0.6×1.83=0.54 MPa, that is, the upper edge of the joint interface 21 of the conventional T-beam bridge will not crack. Further, all three intermediate diaphragms 31 of the conventional T-beam bridge were eliminated. Calculation showing the transverse stress on the top surface of the deck slab in the range of 1/2L to 5/8L in the longitudinal direction of the conventional T-beam bridge without intermediate diaphragms 31 is shown in FIG. 13. It can be seen that the tensile stress on the upper edge of the joint interface 21 at a distance d=4.225 m from the center line of the leftmost web 11 is the largest, with a value of σ_{b}⁽⁰⁾=0.93 MPa>*f*_{tjp.} It can be seen that after long-term operation, the upper edge of the joint of a conventional T-beam bridge without intermediate diaphragms 31 will experience large-scale cracking. At the moment of cracking, the waterproof coating of the deck slab at this location is also prone to tearing, potentially damaging parts of the asphalt layer; and when the wheel load directly acts on the wet joint 2, the tensile stress at the lower edge of the joint interface 21 is also significantly greater than *fₜⱼₚ,* so the lower edge of the joint is also prone to cracking. Therefore, the conventional T-beam bridge without intermediate diaphragms 31 exhibits a stress mode in which both the upper and lower edges of the joint may be subjected to tension and cracking. The cracks at the interface are prone to interconnection, ultimately leading to reflective cracks in the asphalt surface under the long-term repetitive effects of direct wheel impact and environmental factors such as rainwater erosion, rebar corrosion, freeze-thaw cycles in winter, and deicing salt corrosion. This is the fundamental cause of the deterioration observed in T-beam bridges without intermediate diaphragms 31 built in China during the 1990s.

Referring to FIGS. 14 and 15, in order to validate the design method of the intermediate diaphragm-free, suspended formwork-free, and negative moment tooth block-free beam bridge of the present invention, a finite element model of a conventional T-beam bridge without intermediate diaphragms 31 is established using the Hambly grillage method, as shown in FIG. 14. The width of the virtual transverse beam in the model is the actual working width a of the deck slab in the longitudinal bridge direction, and the total thickness of the leveling layer and the pavement layer above the deck slab is 0.18 m, thus *a*=max{(*a*₁+2*h*ₚ)+*D*/(*N*-1)/3, 2D/(N-1)/3}=max{(0.2+2×0.18)+2.55/3, 2×2.55/3}=1.70 m. As shown in FIG. 14, the non-uniform deflection {△*ₙ*} of the mid-span section of each prefabricated main girder 1 of the intermediate diaphragm-free beam bridge in the present invention is calculated according to the method of the present invention, where △₁=-10.02 mm, △₂=-6.34 mm, △₃=-3.23 mm, △₄=-1.40 mm, △₅=-0.25 mm; hence △_{g}=△₃-(△₁+△₅)/2=-3.23-(-10.02+-0.25)/2=1.905 mm, then *R*_{eq}=(*D*/2)²/(2△_{g})= (4×2550/2)²/(2×1.905)=6.8268e6 mm. Further, taking the deck slab with a longitudinal width of *a*₀=1 m, it is calculated that *I*_{bmax}=*a*₀·[max(*T*₁, *T*₂)]³/12 = (1000×250³)/12 =1.3021e9 mm⁴, so *M*_{b1max}=*E*_{c}/_{bmax}/*R*_{eq} =3.45e4×1.3021e9/6.8268e6/10⁶=6.58 kN·m, so *M*_{b1}=*M*_{b1max}*d_{y}*/(*D*/2)= 6.58×4225/(4×2550/2)=5.45 kN·m, and σ_{b1}=*M*_{b1}/W_{b}=5.45e6/((1000×200²)/6)=0.82 MPa. A segment with a longitudinal width of *a*₀=1 m is selected at the longitudinal mid-span of the bridge. The bottoms of all webs 11 of the segment are assumed to be vertically rigidly supported. The heaviest axis of a single vehicle load is arranged on the leftmost side. The upper edge stress σ_{b22}=0.37 MPa is calculated according to the conventional structural mechanics method at each section of the deck slab. The joint interface 21 at a distance of d=4.225 m from the center line of the leftmost web 11 is located between the 2nd web 11 and the 3rd web 11. Then, *a*ₙ=min{(*a*₁+2*h*ₚ)+*D*/(*N*-1)/3, 2D/(N-1)/3} *+(n-1)D*/*(N-1)*/*3 = a*₂=min{(0.2+2×0.18)+2.55/3, 2×2.55/3} +(2-1)×2.55/3=1.41+2.55/3=2.26 m, so further at this position, σ_{b2}=σ_{b22}*a*₀/aₙ =0.37×1/2.26=0.16 MPa. In summary, σ_{b} = σ_{b1}+σ_{b2} =0.82+0.16=0.98 MPa. It can be seen that the σ_{b} calculated by the design method of the beam bridge without intermediate diaphragms 31 of the present invention is close to the result in the refined shell-solid finite element model (0.93 MPa), and is slightly conservative. Therefore, the design method of the intermediate diaphragm-free, suspended formwork-free, and negative moment tooth block-free beam bridge proposed by the present invention can be applied to the actual design of such bridges, and greatly simplifies the calculation workload.

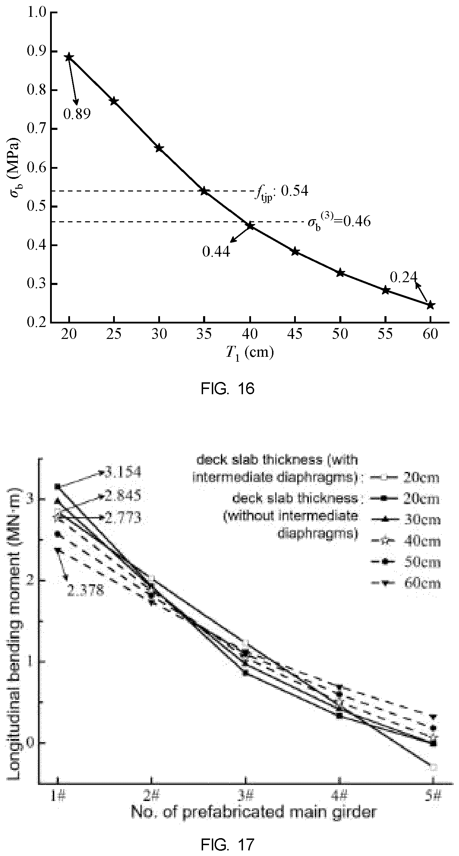

As shown in FIGS. 16 and 17, further, the beam bridge without intermediate diaphragms 31 of the present invention and its design method are adopted, the thickness of *T*₁ is thickened from 20 cm to 60 cm at an increment of 5 cm and the deck slab is kept as a solid plate, and the load arrangement is kept consistent with that in the above-mentioned conventional T-beam bridge having intermediate diaphragms 31. The maximum transverse stress change at the upper edge of the deck slab joint interface 21 at the longitudinal mid-span is calculated as shown in FIG. 16. It can be seen that the transverse tensile stress at the upper edge of the joint interface 21 decreases with the increase of the deck slab thickness; when the deck slab thickness *T*₁ is increased to 40 cm, the maximum tensile stress at the upper edge of the joint interface 21 (σ_{b}=0.44 MPa) is lower than *f*ₜⱼₚ (0.54 MPa) and that in the case with intermediate diaphragms 31 (0.46 MPa), so the lateral force of the solid deck slab at this thickness is slightly better than that of the beam bridge with intermediate diaphragms 31. FIG. 17 shows the variation of the longitudinal bending moment of the T-beam bridge without intermediate diaphragms 31 under the eccentric load of a single lane. It can be seen that after the deck slab is thickened, the uneven variation of the longitudinal bending moment of the T-beam bridge without intermediate diaphragms 31 is reduced. This shows that after the deck slab is thickened, in addition to directly reducing the stress at the joint by increasing the deck slab section modulus *W_{b}* at the joint, the indirect transverse bending moment *M*_{b1} is indirectly reduced by lowering the degree of non-uniform deflection, thereby reducing the stress at the joint of the deck slab. In addition, when the thickness is increased to 40 cm, the bending stiffness of the deck slab section increases by 8 times compared with the original design of 20 cm, and the longitudinal bending moments of the 1st and 2nd prefabricated main girders 1 of the T-beam bridge without intermediate diaphragms 31 are smaller than those of the 1st and 2nd prefabricated main girders 1 of the T-beam bridge with the intermediate diaphragms 31, that is, more bending moments are allocated to the 3rd to 5th prefabricated main girders 1. It can be anticipated that, after applying the most unfavorable multi-lane envelope for longitudinal design control, the internal forces of the outermost girders (1st and 5th prefabricated main girders 1) and the secondary outer girders (2nd and 4th prefabricated main girders 1) will be smaller than those of the T-beam bridge with the intermediate diaphragms 31. That is, the T-beam bridge without intermediate diaphragms 31 of this thickness performs better in longitudinal force resistance under vehicle load than the T-beam bridge with the intermediate diaphragms 31 (however, considering that the proportion of the vehicle load effect to the total effect in the longitudinal calculation of the concrete beam bridge is small, the difference in longitudinal force with and without the intermediate diaphragms 31 will not be significant).

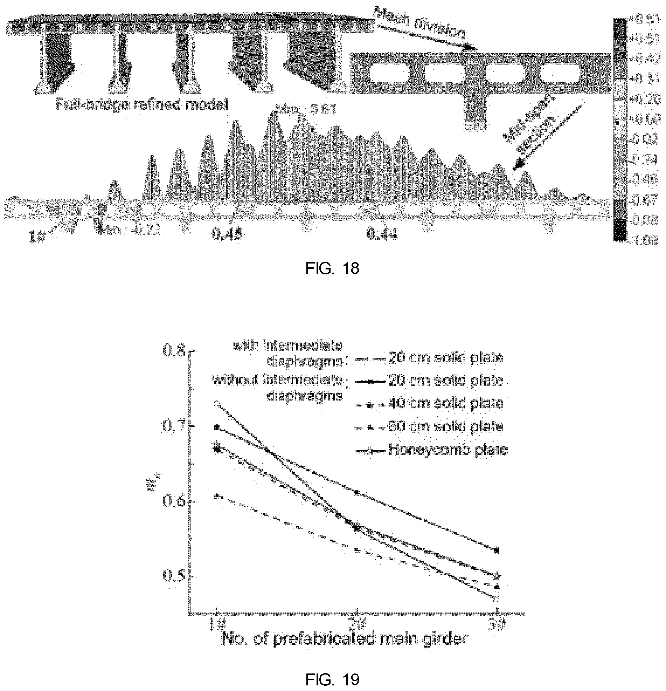

Therefore, when the deck slab of the above-mentioned T-beam bridge without intermediate diaphragms 31 is increase to 40 cm, the load-bearing capability of the longitudinal girders and the deck slab under the vehicle load is better than that of the T-beam bridge with the intermediate diaphragms 31, but the effect of the dead load is significantly increased at the same time, and the comprehensive benefit may not be economical. Therefore, holes are arranged at intervals in the longitudinal and transverse directions of the 40 cm-thick solid deck slab. That is, a honeycomb deck slab is adopted, and deck slab transverse ribs 124 are arranged between the longitudinally adjacent deck slab holes 123. In addition, a cantilever slab 121 is arranged at the transverse end of each prefabricated main girder 1, and the transverse net distance of the cantilever slabs 121 between two adjacent prefabricated main girders 1 is 4 cm, and a prefabricated cushion plate 122 of M50 grade mortar is arranged above the cantilever slab 121, and the cushion plate 122 forms an integrated structure with concrete of the wet joint 2 and bears force together. Here, the maximum tensile stress at the upper edge of the joint interface 21 of the honeycomb deck slab calculated according to the design method of the present invention is σ_{b}=0.48 MPa, which is still lower than *f*ₜⱼₚ (0.54 MPa), that is, the upper edge of the joint interface 21 will not crack, and the stress is basically consistent with the stress of the 40 cm solid deck slab and the T beam bridge with the intermediate diaphragms 31. As shown in FIG. 21, a scaled test specimen was made for the above-mentioned T-beam bridge without intermediate diaphragms adopting a honeycomb deck slab, and a refined shell-solid finite element model of the whole bridge calibrated based on the test data was established. The calculated results of the transverse stress in the mid-span section are shown in FIG. 18, and the maximum tensile stress on the upper edge of the joint interface 21 is 0.45 MPa, which is close to the σ_{b} calculated by the design method of the present invention, further proving that the method of the present invention is sufficiently accurate and relatively safe.

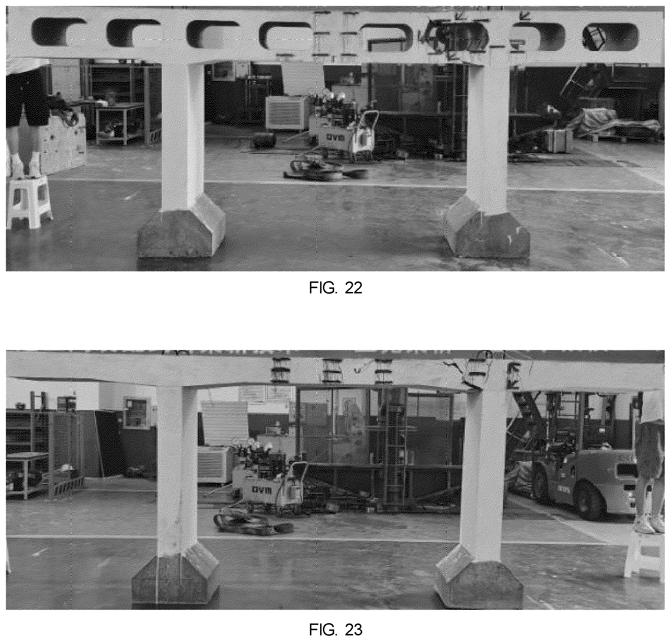

Finally, for the different bridge types in this example, the maximum transverse distribution factors {*mₙ*} of the prefabricated main girders 1 are compared (taking the envelope value under 1 to 3 lanes load) as shown in FIG. 19. It can be seen that the transverse distribution factor of the intermediate diaphragm-free T-beam bridge adopting a honeycomb deck slab is basically consistent with that of the 40 cm solid deck slab, indicating that the force transmission performance of the solid deck slab is not significantly changed after the holes are provided, and the transverse distribution factor of the outermost beam of the intermediate diaphragm-free T-beam bridge adopting a honeycomb deck slab is significantly reduced compared with the conventional T-beam bridge, while the second outer beam is basically the same, indicating that it has better longitudinal force performance than the conventional T-beam bridge. As shown in FIGS. 22 and 23, in order to validate the anti-cracking effect of the wet joint 2 and the stress-bearing performance of the cantilever slab 121 and the cushion plate 122 of the above-mentioned intermediate diaphragm-free T-beam bridge, a full-scale segment test specimen was made and static loading was carried out, and comparison was made with respect to the full-scale segment specimen test of the conventional T-beam bridge. During the static loading, cracks appeared in the joint interface 21 of the conventional T-beam bridge when loaded to 87.5 kN, while no cracks appeared in the joint interface 21 of the intermediate diaphragm-free T-beam bridge even when loaded to the destruction load of 335.2 kN. It can be seen that the anti-cracking performance of the wet joint 2 of the T-beam bridge without intermediate diaphragms is significantly higher than that of the conventional T-beam bridge, and the combined stress-bearing performance of the cantilever slab 121 and the cushion plate 122 is also sufficiently safe and reliable.

In this example, FIG. 20 is a photograph of a scaled test specimen of a conventional T-beam bridge. In this example, the scaled test specimen shown in FIG. 20 is used to calibrate the full-bridge refined shell-solid finite element model of the conventional T-beam bridge with intermediate diaphragms 31 to compare and verify the reason why the joint interface 21 of the conventional T-beam bridge without intermediate diaphragms 31 is prone to cracking.

FIG. 21 is a photograph of a scaled test specimen of the intermediate diaphragm-free T-beam bridge adopting a honeycomb deck slab in Example C. In this example, the scaled test specimen shown in FIG. 21 is used to test the intermediate diaphragm-free T-beam bridge, and the full-bridge refined shell-solid finite element model of the intermediate diaphragm-free T-beam bridge adopting the honeycomb deck slab is calibrated based on the test data, and the maximum tensile stress at the upper edge of the joint interface 21 at the mid-span section is calculated, and then result is compared with the σ_{b} obtained by the design method of the present invention to verify the accuracy and safety of the design method of the present invention.

FIG. 22 is a photograph of the full-scale segment specimen of the intermediate diaphragm-free T-beam bridge adopting the honeycomb deck slab in Example C, and FIG. 23 is a photograph of the full-scale segment specimen of the conventional T-beam bridge in Example C. By comparing the static loading test data of the full-scale segment specimens in FIGS. 22 and 23, it can be seen that the crack resistance at the joints of the honeycomb deck slab of the intermediate diaphragm-free T-beam bridge is significantly higher than that of the 20 cm-thick solid deck slab of the conventional T-beam bridge, and the combined stress performance of the cantilever slab 121 and the cushion plate 122 is safe and reliable.

The above are only preferred embodiments of the present invention and are not intended to limit the present invention. The scope of the invention is described in the appended claims.

## Claims

1. Construction method of an intermediate diaphragm-free, wherein intermediate diaphragms (31, see figure 1) are all transverse diaphragms except those at pier caps, suspended formwork-free, wherein suspended formwork is the formwork necessary for building the wet joint (2, see figure 2) of the deck slab, and negative moment tooth block-free beam bridge , wherein the negative moment tooth blocks are the anchoring blocks (52, see figure 1) for a tendon (5), the construction method comprising a design method for the purpose of constructing the beam bridge, wherein the intermediate diaphragm-free, suspended formwork-free, and negative moment tooth block-free beam bridge comprises prefabricated main girders (1), a wet joint (2), pier cap transverse beams (3), and lower structures (4), wherein adjacent prefabricated main girders are connected by the wet joint (2), each pier cap transverse beam is connected to a respective one of the prefabricated main girders (1), and the pier cap transverse beams (3) are respectively arranged above the lower structures (4); and the prefabricated main girder (1) comprises a web and a concrete deck slab, adjacent concrete deck slabs are connected by the wet joint (2), a contact surface between the concrete deck slab and the wet joint forms a joint interface, and the web is integrally formed with the concrete deck slab; **characterized in that** the design method of the beam bridge comprises the following steps:
S1, design of initial structural parameters of the prefabricated main girders: assuming, based on statistical data of structural dimensions of a built beam bridge, a sectional form, a maximum span L, and a sectional inertia moment / of the prefabricated main girders; assuming a thickness of each concrete deck slab at the joint interfaces is *T*₁, a thickness of each concrete deck slab at the webs is *T*₂ and a number of the prefabricated main girders arranged in a transverse direction of the beam bridge is J; numbering the webs from left to right in the transverse direction as 1st, 2nd, 3rd,..., (N-1)th, and Nth, respectively, and a transverse distance between center lines of the webs at both ends of the beam bridge in the transverse direction being D;
S2, calculation of indirect transverse stress of the concrete deck slabs: setting, according to an actual support situation, a load at an outermost part in the transverse direction of the beam bridge, and calculating a non-uniform deflection {△*ₙ*} of the prefabricated main girders, where {△*ₙ*}={△₁, △₂, △₃, ..., △_{*N*-1}, △*_{N}*}, and △₁, △₂, △₃,... △_{*N-*1}*,* and △*_{N}* are vertical deflections of the 1st, 2nd, 3rd,..., (N-1)th, and Nth webs, respectively; taking a segment along a longitudinal direction of the beam bridge, assuming that bottom parts of the webs in the segment are vertically rigidly supported, and applying forced displacements of △₁, △₂, △₃, ... , △_{*N*-1}, and △*_{N}* to the bottom parts of the 1st, 2nd, 3rd, ..., (N-1)th, and Nth webs correspondingly, and calculating the indirect transverse stress σ_{b1} on a top surface of the concrete deck slabs at this moment; wherein,
the non-uniform deflection {△*ₙ*} is such that {△*ₙ*}={*mₙ*}*w,* where w is a vertical deflection generated when assuming that one of the prefabricated main girders of the beam bridge bears the load alone; {*mₙ*} is a set of load transverse distribution factors of all the prefabricated main girders when loaded, {*mₙ*} is calculated according to a conventional rigidly connected plate method, and an equivalent moment of inertia of a longitudinal unit-width deck slab in the rigidly connected plate method is *I*_{beq} = *F*(*D*/(*N*-1))³/(48*E_{c}w*_{eq})*,* where *E*_{c} is an elastic modulus of the concrete deck slab, *F* is a unit force, and *w*_{eq} is an equivalent flexibility, and *w*_{eq} is calculated as follows: assuming the concrete deck slab between center lines of the 1st and 2nd webs to be a simply supported beam supported at the webs, when F is applied at a mid-span of the simply supported beam, *w*_{eq} is a mid-span vertical deflection calculated by a conventional structural mechanics method or finite element modeling,
alternatively, a full-bridge finite element model is established for the non-uniform deflection {Δn} according to a conventional Hambly' s grillage method, and a width of a virtual transverse beam in the model is an actual working width a of the concrete deck slabs in the longitudinal direction of the beam bridge, and a=max{(a₁+2hₚ)+D/(N-1)/3, 2D/(N-1)/3}, where a₁ is a contact dimension of a heaviest wheel of a vehicle load in the longitudinal direction of the beam bridge, and hₚ is a total thickness of a leveling layer and a pavement layer above the concrete deck slabs; a single car or train load is set to a leftmost side, and the non-uniform deflection {△n} of the prefabricated main girders is calculated;
S3, calculation of direct transverse stress of the concrete deck slabs: assuming that the bottom parts of the webs are vertically rigidly supported, setting the load at the outermost part in the transverse direction of the beam bridge, and calculating the direct transverse stress σ_{b2} on the top surface of the concrete deck slabs;
S4, crack resistance calculation of the top surface of the concrete deck slabs: calculating a most unfavorable transverse stress σ_{b} on the top surface of the concrete deck slabs by superposition of the indirect transverse stress σ_{b1} and the direct transverse stress σ_{b2}, that is, σ_{b} = σ_{b1}+σ_{b2};
if σ_{b} ≥ *f*ₜⱼₚ at the joint interface, where *f*ₜⱼₚ is a fatigue tensile strength at the joint interface, proceeding to step S5; and
if *σ_{b}<fₜⱼₚ* at the joint interface, proceeding to step S6;
S5, increasing *T*₁ and/or *T*₂ and/or J and/or *I,* and/or reducing L, returning to step S2, and performing the crack resistance calculation of the top surface of the concrete deck slabs again; and
S6, completion of remaining design according to a conventional method: applying multi-lane, multi-vehicle live loads and other design loads following a conventional influence line approach, determining a configuration of rebars and tendons in the prefabricated main girders according to a most unfavorable full-bridge internal force state under the design load combination and a conventional structural design method to complete the beam bridge design;
wherein, the construction of the beam bridge is carried out based on the values of *T*₁, *T₂, J,* / and L obtained in the step S6.

2. The construction method according to claim 1, **characterized in that**, the load in step S2 is set at a leftmost side in the transverse direction of the beam bridge within regulatory requirements, and the load in step S3 is set at the leftmost side in the transverse direction of the beam bridge within the regulatory requirements.

3. The construction method according to claim 1, **characterized in that**, for a section of the concrete deck slab with a longitudinal width of a₀, the σ_{b1} in step S2 is such that σ_{b1}=M_{b1}/*W*_{b}, where *W_{b}* is a section modulus of the section of the concrete deck slab with the longitudinal width of *a*₀, and *M*_{b1} is the indirect transverse bending moment of the section of the concrete deck slab with the longitudinal width of *a*₀; and *M*_{b1}=*M*_{b1max}*d_{y}*/(*D*/2), where *d_{y}* is a transverse distance of the section from a center line of the web on the leftmost side; *M*_{b1max}=*E*_{c}/_{bmax}/R_{eq}, *I*_{bmax}=*a*₀· [max(*T*₁, *T*₂)]³/12, where *E*_{c} is an elastic modulus of the concrete deck slab, *R*_{eq} is an equivalent curvature radius of the concrete deck slab under the forced displacements of △₁, △₂, △₃, ... , △_{*N*-1}, and △*_{N}*; *R*_{eq} =(*D*/2)²/(2△_{g}), where △_{g} is a relative camber; when *N* is an odd number, △_{g} = △_{(*N+*1)/2}-(△₁*+*△*_{N}*)/2, and when N is an even number, △_{g} =(△_{*N*/2}*+*△_{*N*/2+1})/2*-*(△₁*+*△*_{N}*)/2*.*

4. The construction method according to claim 1, **characterized in that**, a segment with a longitudinal width of *a*₀ is taken at a longitudinal mid-span of the beam bridge, the bottom parts of the webs in the segment are assumed to be vertically rigidly supported, a heaviest axis of a single vehicle or train load is set at a leftmost side of the segment, and an upper edge stress σ_{b22} in the transverse direction at each section of the segment is calculated according to a conventional structural mechanics method or finite element modeling; and
in step S3, σ_{b2} at each section is such that σ_{b2}=σ_{b22} a₀/*aₙ*, when the section is located between the nth web and the (n+1)th web, *aₙ*=min{(*a*₁+2*h*ₚ)+*D*/(*N*-1)/3, *2D*/*(N-1)*/*3}+(n-*1)D/(N-1)/3, otherwise *aₙ* =(*a*₁+2 *h*ₚ)+2*d*_{c}, where *a*₁ is a contact dimension of a heaviest wheel of the vehicle load in the longitudinal direction of the beam bridge, *h*ₚ is a total thickness of a leveling layer and a pavement layer above the concrete deck slabs, *d*_{c} is a distance from a leftmost edge of a leftmost-wheel contact area of the vehicle load to a center line of the leftmost web.

5. The construction method according to claim 1, **characterized in that**, in step S4, the σ_{b} is calculated only at a mid-span position at a maximum span of the concrete deck slabs in the longitudinal direction, and the crack resistance calculation is performed only at an joint interface at a distance d from a center line of a leftmost web; and when J is an odd number, d is the distance from the center line of the leftmost web in the transverse direction to a left joint interface of a (J+1)/2-th prefabricated main girder, and when J is an even number, d is the distance from the center line of the leftmost web in the transverse direction to a right joint interface of a J/2-th prefabricated main girder.

6. The construction method according to claim 1, **characterized in that**, the *f*ₜⱼₚ in step S4 is such that *f*ₜⱼₚ = γⱼγₚ·min(*f*_{ty}, *f*ₜⱼ), where *f*_{ty} is a design value of a tensile strength of concrete of the prefabricated main girders, *f*ₜⱼ is a design value of a tensile strength of concrete of the wet joint, γⱼ is a concrete tensile strength correction coefficient at the joint interface, and γₚ is a concrete fatigue tensile strength correction coefficient.

7. The construction method according to claim 1, **characterized in that**, a cantilever slab is provided at a transverse end of each of the prefabricated main girders, and a transverse net distance of cantilever slabs between adjacent prefabricated main girders does not exceed 60 cm, a cushion plate is provided above the cantilever slab, and the cushion plate is connected to the wet joint to form an integrated load-bearing structure.

8. The construction method according to claim 1, **characterized in that**, the prefabricated main girders further comprises a negative bending moment tendon and anchoring grooves, two or more prefabricated main girders are provided in the longitudinal direction of the beam bridge, and adjacent prefabricated main girders in the longitudinal direction of the beam bridge are connected by the negative bending moment tendon, with min(*T*₁, *T*₂) ≥ 20 cm, the anchoring grooves are preset in the concrete deck slabs, in which the negative bending moment tendon is anchored.

9. The construction method according to any one of claims 1 to 8 **characterized in that**, the prefabricated main girders further comprise deck slab transverse ribs, the concrete deck slabs are provided with deck slab holes evenly spaced along the longitudinal and transverse directions, the deck slab transverse ribs are provided between longitudinally adjacent deck slab holes, and the deck slab transverse ribs are provided with shear reinforcement rebars arranged at intervals along the transverse direction.

10. The construction method according to any one of claims 1 to 8, **characterized in that**, each of the prefabricated main girders further comprises a closed box-shaped section structure, a bottom slab is provided at the bottom part of the web, the bottom slab, the web, and the concrete deck slab form the closed box-shaped section structure, a transverse end of the concrete deck slab is provided with an end thickened part, and the end thickened part is connected to the wet joint.

11. The construction method according to claim 10, **characterized in that**, the transverse end of the concrete deck slab is provided with an end bevel, the end thickened part comprises a bevel surface of thickened part and a plane surface of thickened part, the bevel surface of thickened part is connected to the wet joint, a slope of the bevel surface of thickened part is not greater than 1.00, and *T*₁ > *T*₂.

12. The construction method according to any one of claims 1 to 8, **characterized in that**, bottom slabs are provided at the bottom parts of the webs, end thickened parts are provided at transverse ends of the concrete deck slabs, a deck slab transverse rib is provided between each of the webs and a corresponding one of the end thickened parts, and the deck slab transverse ribs are located below the concrete deck slabs and arranged at intervals along a longitudinal direction of the concrete deck slabs.

13. The construction method according to claim 12, **characterized in that** each concrete deck slab is connected to a corresponding one of the deck slab transverse ribs, and the thickness *T*₁ of each concrete deck slab at the joint interface comprises a sectional thickness of the concrete deck slab and a sectional thickness of the corresponding one of the deck slab transverse ribs at the joint interface, and T₁ ≥ 30 cm.

14. The construction method according to any one of claims 1 to 8, **characterized in that**, the webs of the prefabricated main girders comprise a steel structure, and side surfaces of the webs are provided with web vertical ribs spaced apart along the longitudinal direction of the beam bridge, and top ends of the web vertical ribs are connected to the deck slabs.

15. The construction method according to claim 14, **characterized in that** the prefabricated main girders further comprise deck slab transverse ribs, the deck slab transverse ribs are arranged between the webs and the end thickened parts, and the web vertical ribs are located at the same positions as the deck slab transverse ribs over the longitudinal direction of the beam bridge to resist a transverse deformation transmitted by the deck slab transverse ribs.

## Patentansprüche

1. . Bauverfahren für eine zwischenmembranfreie Konstruktion, wobei die Zwischenmembrane (31, siehe Figur 1) alle Quermembrane sind, mit Ausnahme derjenigen an den Pfeilerköpfen, die schalungsfrei aufgehängt sind, wobei die aufgehängte Schalung die für den Bau der Nassfuge (2, siehe Figur 2) der Fahrbahnplatte notwendige Schalung ist, und es sich um eine Balkenbrücke ohne Zahnblöcke für negatives Moment handelt, wobei die Zahnblöcke für negatives Moment die Verankerungsblöcke (52, siehe Figur 1) für ein Spannglied (5) sind, wobei das Bauverfahren ein Bemessungsverfahren zu dem Zweck des Baus der Balkenbrücke umfasst, wobei die zwischenmembranfreie, schalungsfrei aufgehängte und ohne Zahnblöcke für negatives Moment ausgeführte Balkenbrücke aus vorgefertigten Hauptträgern (1), einer Nassfuge (2), Pfeilerkopf-Querträgern (3) und Unterbauten (4) besteht, wobei benachbarte vorgefertigte Hauptträger durch die Nassfuge (2) verbunden sind, jeder Pfeilerkopf-Querträger mit einem jeweiligen der vorgefertigten Hauptträger (1) verbunden ist und die Pfeilerkopf-Querträger (3) jeweils oberhalb der Unterbauten (4) angeordnet sind; und
der vorgefertigte Hauptträger (1) einen Steg und eine Betonfahrplatte umfasst, benachbarte Betonfahrbahnplatten durch die Nassfuge (2) verbunden sind, eine Kontaktfläche zwischen der Betonfahrbahnplatte und der Nassfuge einen Fugenübergang bildet, und der Steg einstückig mit der Betonfahrbahnplatte ausgebildet ist;
**gekennzeichnet dadurch, dass** das Bemessungsverfahren für die Balkenbrücke die folgenden Schritte umfasst:
S1, Entwerfen der anfänglichen Strukturparameter der vorgefertigten Hauptträger: basierend auf statistischen Daten der Strukturabmessungen einer gebauten Balkenbrücke, Annehmen einer Querschnittsform, einer maximalen Spannweite *L* und eines Flächenträgheitsmoments / der vorgefertigten Hauptträger; Annehmen, dass eine Dicke jeder Betonfahrbahnplatte an den Fugenübergängen *T*₁ beträgt, eine Dicke jeder Betonfahrbahnplatte an den Stegen *T*₂ beträgt und eine Anzahl der in Querrichtung der Balkenbrücke angeordneten vorgefertigten Hauptträger *J* beträgt; wobei die Stege von links nach rechts in Querrichtung als 1., 2., 3., ..., (*N*-1). bzw. *N*. nummeriert sind, sowie ein Querabstand zwischen den Mittellinien der Stege an beiden Enden der Balkenbrücke in Querrichtung D beträgt;
S2, Berechnen der indirekten Querspannung der Betonfahrbahndeckenplatten: Festlegen, entsprechend einer tatsächlichen Auflagersituation, einer Last an einem äußersten Teil in Querrichtung der Balkenbrücke und Berechnen einer ungleichmäßigen Durchbiegung {Δ*ₙ*} der vorgefertigten Hauptträger, wobei {Δ*ₙ*}={Δ₁, Δ₂, Δ₃, ..., Δ*_{N-1}*, Δ*_{N}*} ist und Δ₁, Δ₂, Δ₃,...,Δ*_{N-1}* und Δ*_{N}* die vertikalen Durchbiegungen der 1., 2., 3.,..., (*N*-1)-ten und *N-*ten Stege sind; Hernehmen eines Abschnitts entlang der Längsrichtung der Balkenbrücke, Annehmen, dass die unteren Teile der Stege im Abschnitt vertikal starr gelagert sind, und Anlegen erzwungener Verschiebungen von Δ₁, Δ₂, Δ₃, ..., Δ*_{N-1}* und Δ*_{N}* an den unteren Teilen der 1., 2., 3., ..., (*N*-1)-ten und *N*-ten Stege dementsprechend, und Berechnen der indirekten Querspannung σ_{b1} auf der oberen Oberfläche der Betonfahrbahndeckenplatten zu diesem Zeitpunkt; wobei
die ungleichmäßige Durchbiegung {Δ*ₙ*} so ist, dass {Δ*ₙ*}={*mₙ*}*w* gilt, wobei w eine vertikale Durchbiegung ist, die unter der Annahme erzeugt wird, dass einer der vorgefertigten Hauptträger der Balkenbrücke allein die Last trägt; {*mₙ*} eine Menge von Faktoren zur Querverteilung der Lasten aller vorgefertigten Hauptträger bei Belastung, {*mₙ*} nach einer herkömmlichen Methode für starr verbundene Platten berechnet wird, und ein äquivalentes Trägheitsmoment einer längsgerichteten Fahrbahnplatte mit Einheitsbreite in der Methode für starr verbundene Platten *I*_{beq} = *F*(*D*/(*N*-1))³/(48E*_{c}w*_{eq}) beträgt, wobei *E_{c}* ein Elastizitätsmodul der Betonfahrbahnplatte ist, *F* eine Einheitskraft darstellt und *w*_{eq} eine äquivalente Flexibilität ist, und *w*_{eq} wie folgt berechnet wird: Annehmen, dass die Betonfahrbahnplatte zwischen den Mittellinien der 1. und 2. Stege ein einfach gelagerter Balken ist, der an den Stegen abgestützt ist, wenn *F* in der Mittelspannweite des einfach gelagerten Balkens aufgebracht wird, ist *w*_{eq} die mittlere vertikale Durchbiegung in der Mittelspannweite, die durch eine herkömmliche Strukturmechanik-Methode oder Finite-Elemente-Modellierung berechnet wird,
alternativ wird ein Vollbrücken-Finite-Elemente-Modell für die ungleichmäßige Durchbiegung {Δn} nach dem herkömmlichen Trägerrostverfahren nach Hambly erstellt, wobei die Breite eines virtuellen Querträgers im Modell der tatsächlichen Arbeitsbreite a der Betonfahrbahnplatten in Längsrichtung der Balkenbrücke entspricht, und a=max{(a₁+2hₚ)+D/(N-1)/3, 2D/(N-1)/3}, wobei a₁ eine Kontaktabmessung des schwersten Rads einer Fahrzeuglast in Längsrichtung der Balkenbrücke ist und hₚ die Gesamtdicke einer Ausgleichsschicht und einer Deckschicht über den Betonfahrbahnplatten darstellt; eine einzelne Fahrzeug- oder Zuglast wird auf der äußersten linken Seite angesetzt, und die ungleichmäßige Durchbiegung {Δn} der vorgefertigten Hauptträger wird berechnet;
S3, Berechnen der direkten Querspannung der Betonfahrbahnplatten: Annehmen, dass die unteren Teile der Stege vertikal starr gelagert sind, Festlegen der Last am äußersten Teil in Querrichtung der Balkenbrücke und Berechnen der direkten Querspannung σ_{b2} auf der oberen Oberfläche der Betonfahrbahnplatten;
S4, Berechnen der Rissbeständigkeit der oberen Oberfläche der Betonfahrbahnplatten: Berechnen einer ungünstigsten Querspannung σ_{b} auf der oberen Oberfläche der Betonfahrbahnplatten durch Überlagerung der indirekten Querspannung σ_{b1} und der direkten Querspannung σ_{b2}, das heißt, σ_{b} = σ_{b1}+σ_{b2};
wenn σ_{b} ≥ *f*ₜⱼₚ an dem Fugenübergang gilt, wobei *f*ₜⱼₚ die Ermüdungszugfestigkeit an dem Fugenübergang ist, Fortfahren mit Schritt S5; und
wenn σ_{b}<*f*ₜⱼₚ an dem Fugenübergang gilt, Fortfahren mit Schritt S6;
S5, Erhöhen von *T*₁ und/oder *T*₂ und/oder *J* und/oder *I* , und/oder Verringern von *L*, Zurückkehren zu Schritt S2 und erneutes Durchführen der Rissbeständigkeitsberechnung der oberen Oberfläche der Betonfahrbahnplatten; und
S6, Fertigstellen der verbleibenden Bemessung nach einer herkömmlichen Methode: Anwenden von Mehrspur- und Mehrfahrzeug-Verkehrslasten sowie anderen Bemessungslasten nach einem herkömmlichen Einflusslinienansatz, Bestimmen einer Konfiguration von Bewehrungsstäben und Spanngliedern in den vorgefertigten Hauptträgern entsprechend einem ungünstigsten inneren Kraftzustand der gesamten Brücke unter der Bemessungslastkombination sowie einer herkömmlichen Tragwerksbemessungsmethode zur Fertigstellung der Balkenbrückenbemessung;
wobei der Bau der Balkenbrücke auf der Grundlage der in Schritt S6 erhaltenen Werte von *T*₁, *T₂, J, I* und *L* durchgeführt wird.

2. . Bauverfahren nach Anspruch 1, **dadurch gekennzeichnet, dass** die Last in Schritt S2 an der äußersten linken Seite in Querrichtung der Balkenbrücke innerhalb der zulässigen Vorschriften festgelegt wird und die Last in Schritt S3 an der äußersten linken Seite in Querrichtung der Balkenbrücke innerhalb der zulässigen Vorschriften festgelegt wird.

3. . Bauverfahren nach Anspruch 1, **dadurch gekennzeichnet, dass** für einen Querschnitt der Betonfahrbahnplatte mit einer Längsbreite von *a*₀ der Wert σ_{b1} in Schritt S2 so ist, dass σ_{b1}=*M*_{b1}/*W*_{b}, wobei *W*_{b} ein Widerstandsmoment des Querschnitts der Betonfahrbahnplatte mit der Längsbreite von *a*₀ ist, und *M*_{b1} das indirekte Querbiegemoment des Querschnitts der Betonfahrbahnplatte mit der Längsbreite von *a*₀ ist; und
*M*_{b1}=*M*_{b1max}*d*_{y}/(*D*/2), wobei *d_{y}* ein Querabstand des Querschnitts von der Mittellinie des Stegs auf der äußersten linken Seite ist; *M*_{b1max}=*E_{c}I*_{bmax}*IR*_{eq}, *I*_{bmax}=*a*₀·[max(*T*₁, *T*₂)]³/12, wobei *E_{c}* der Elastizitätsmodul der Betonfahrbahnplatte ist, *R*_{eq} der äquivalente Krümmungsradius der Betonfahrbahnplatte unter den erzwungenen Verschiebungen Δ₁, Δ₂, Δ₃, ..., Δ*_{N-1}* und Δ*_{N}* ist; *R*_{eq} =(*D*/2)²/(2Δ_{g})*,* wobei Δ_{g} eine relative Wölbung ist; wenn N eine ungerade Zahl ist, gilt Δ_{g} = Δ_{(N+1)/2}-(Δ₁+Δ*_{N}*)/2, und wenn *N* eine gerade Zahl ist, gilt Δ_{g}=(Δ_{*N*/*2*}+Δ_{*N*/*2+1*})/2-(Δ₁+Δ*_{N}*)/2.

4. . Bauverfahren nach Anspruch 1, **dadurch gekennzeichnet, dass** ein Segment mit einer Längsbreite von *a*₀ in der Längsmittelspannweite der Balkenbrücke genommen wird, wobei angenommen wird, dass die unteren Teile der Stege im Segment als vertikal starr gelagert sind, eine schwerste Achslast eines einzelnen Fahrzeugs oder Zuges an der äußersten linken Seite des Segments festgelegt wird und die Oberrandspannung σ_{b22} in Querrichtung an jedem Querschnitt des Segments nach einer herkömmlichen Strukturmechanik-Methode oder Finite-Elemente-Modellierung berechnet wird; und
in Schritt S3 σ_{b2} an jedem Querschnitt so ist, dass σ_{b2}=σ_{b22} *a*₀/*a*ₙ gilt, wenn sich der Querschnitt zwischen dem n-ten Steg und dem (n+1)-ten Steg befindet, *aₙ*=min{(α₁+2*h*ₚ)+*D*/(*N*-1)/3, 2D/(N-1)/3}+(n-1)D/(N-1)/3, andernfalls *aₙ*=(*a*₁+2 *h*ₚ)+2*d_{c}*, wobei *a*₁ eine Kontaktabmessung des schwersten Rads der Fahrzeuglast in Längsrichtung der Balkenbrücke ist, hₚ die Gesamtdicke einer Ausgleichsschicht und einer Deckschicht über den Betonfahrbahnplatten darstellt, d_{c} der Abstand von dem äußersten linken Rand des Kontaktbereichs des äußersten linken Rads der Fahrzeuglast bis zu der Mittellinie des äußersten linken Stegs ist.

5. . Bauverfahren nach Anspruch 1, **dadurch gekennzeichnet, dass** in Schritt S4 der Wert σ_{b} nur an einer Position der Mittelspannweite bei einer maximalen Spannweite der Betonfahrbahnplatten in Längsrichtung berechnet wird und die Rissbeständigkeitsberechnung nur an einem Fugenübergang in einem Abstand von *d* von einer Mittellinie eines äußersten linken Stegs durchgeführt wird; und wenn *J* eine ungerade Zahl ist, ist d der Abstand von der Mittellinie des äußersten linken Stegs in Querrichtung zu einem linken Fugenübergang des (J+1)/2-ten vorgefertigten Hauptträgers, und wenn *J* eine gerade Zahl ist, ist d der Abstand von der Mittellinie des äußersten linken Stegs in Querrichtung zu einem rechten Fugenübergang des *J*/2-ten vorgefertigten Hauptträgers.

6. . Bauverfahren nach Anspruch 1, **dadurch gekennzeichnet, dass** der Wert *f*ₜⱼₚ in Schritt S4 so ist, dass *f*ₜⱼₚ = *Y*ⱼ*Y*ₚ·min(*f*_{ty}, *f*ₜⱼ), wobei *f*_{ty} ein Bemessungswert der Zugfestigkeit des Betons der vorgefertigten Hauptträger ist, *f*ₜⱼ ein Bemessungswert der Zugfestigkeit des Betons der Nassfuge ist, *Y*ⱼ ein Korrekturfaktor für die Zugfestigkeit des Betons an dem Fugenübergang ist und *Y*ₚ ein Korrekturfaktor für die Ermüdungszugfestigkeit des Betons ist.

7. . Bauverfahren nach Anspruch 1, **dadurch gekennzeichnet, dass** an einem Querende jedes der vorgefertigten Hauptträger eine Auskragungsplatte vorgesehen ist und der Netto-Querabstand der Auskragungsplatten zwischen benachbarten vorgefertigten Hauptträgern 60 cm nicht überschreitet, eine Dämpfungsplatte oberhalb der Auskragungsplatte angeordnet ist und die Dämpfungsplatte mit der Nassfuge verbunden ist, um eine integrierte tragende Struktur zu bilden.

8. . Bauverfahren nach Anspruch 1, **dadurch gekennzeichnet, dass** die vorgefertigten Hauptträger ferner eine Zugbewehrung für negatives Biegemoment und Verankerungsnuten umfassen, wobei zwei oder mehr vorgefertigte Hauptträger in Längsrichtung der Balkenbrücke angeordnet sind und benachbarte vorgefertigte Hauptträger in Längsrichtung der Balkenbrücke durch die Zugbewehrung für negatives Biegemoment verbunden sind, wobei min(*T*₁, *T*₂) ≥ 20 cm gilt, wobei die Verankerungsnuten in den Betonfahrbahnplatten voreingestellt sind, in denen die Zugbewehrung für negatives Biegemoment verankert sind.

9. . Bauverfahren nach einem der Ansprüche 1 bis 8, **dadurch gekennzeichnet, dass** die vorgefertigten Hauptträger zusätzlich Querrippen der Fahrbahnplatte umfassen, die Betonfahrbahnplatten mit Fahrbahnplattenöffnungen versehen sind, die gleichmäßig in Längs- und Querrichtung angeordnet sind, zwischen längs benachbarten Fahrbahnplattenöffnungen Querrippen der Fahrbahnplatte angeordnet sind und die Querrippen der Fahrbahnplatte mit Schubbewehrungsstäben versehen sind, die in Abständen entlang der Querrichtung angeordnet sind.

10. . Bauverfahren nach einem der Ansprüche 1 bis 8, **dadurch gekennzeichnet, dass** jeder der vorgefertigten Hauptträger ferner eine geschlossene, kastenförmige Querschnittsstruktur umfasst, am unteren Teil des Stegs eine Bodenplatte angeordnet ist, die Bodenplatte, der Steg und die Betonfahrbahnplatte die geschlossene, kastenförmige Querschnittsstruktur bilden, an einem Querende der Betonfahrbahnplatte ein endseitig verdickter Teil vorgesehen ist und der endseitig verdickte Teil mit der Nassfuge verbunden ist.

11. . Bauverfahren nach Anspruch 10, **dadurch gekennzeichnet, dass** das Querende der Betonfahrbahnplatte mit einer Endfase versehen ist, der endseitig verdickte Teil eine Fase des verdickten Teils und eine ebene Fläche des verdickten Teils umfasst, die Fase des verdickten Teils mit der Nassfuge verbunden ist, die Neigung der Fase des verdickten Teils nicht größer als 1,00 ist und *T*₁ > *T*₂ gilt.

12. . Bauverfahren nach einem der Ansprüche 1 bis 8, **dadurch gekennzeichnet, dass** an den unteren Teilen der Stege Bodenplatten vorgesehen sind, an den Querenden der Betonfahrbahnplatten endseitig verdickte Teile vorgesehen sind, zwischen jedem der Stege und einem entsprechenden der endseitig verdickten Teile eine Querrippe der Fahrbahnplatte vorgesehen ist und die Querrippe der Fahrbahnplatte unterhalb der Betonfahrbahnplatten angeordnet und entlang der Längsrichtung der Betonfahrbahnplatten in Abständen angeordnet sind.

13. . Bauverfahren nach Anspruch 12, **dadurch gekennzeichnet, dass** jede Betonfahrbahnplatte mit einer entsprechenden der Querrippe der Fahrbahnplatten verbunden ist, und die Dicke *T*₁ jeder Betonfahrbahnplatte an dem Fugenübergang eine Querschnittsdicke der Betonfahrbahnplatte und eine Querschnittsdicke der entsprechenden Querrippe der Fahrbahnplatte an dem Fugenübergang umfasst, wobei *T*₁ ≥ 30 cm gilt.

14. . Bauverfahren nach einem der Ansprüche 1 bis 8, **dadurch gekennzeichnet, dass** die Stege der vorgefertigten Hauptträger eine Stahlkonstruktion umfassen und die Seitenflächen der Stege mit vertikalen Stegrippen versehen sind, die entlang der Längsrichtung der Balkenbrücke in Abständen angeordnet sind, und die oberen Enden der vertikalen Stegrippen mit den Fahrbahnplatten verbunden sind.

15. . Bauverfahren nach Anspruch 14, **dadurch gekennzeichnet, dass** die vorgefertigten Hauptträger ferner Querrippen der Fahrbahnplatte umfassen, die Querrippen der Fahrbahnplatte zwischen den Stegen und den endseitig verdickten Teilen angeordnet sind und sich die vertikalen Stegrippen an denselben Positionen wie die Querrippen der Fahrbahnplatte entlang der Längsrichtung des Balkenbrücke befinden, um einer von den Querrippen der Fahrbahnplatte übertragenen Querverformung entgegenzuwirken.

## Revendications

1. Procédé de construction d'un pont à poutres sans diaphragme intermédiaire, dans lequel les diaphragmes intermédiaires (31, voir figure 1) sont tous des diaphragmes transversaux sauf ceux au niveau des chevêtres, sans coffrage suspendu, dans lequel le coffrage suspendu est le coffrage nécessaire à la construction du joint humide (2, voir figure 2) de la dalle de tablier, et sans bloc denté à moment négatif, dans lequel les blocs dentés à moment négatif sont les blocs d'ancrage (52, voir figure 1) pour une armature de précontrainte (5), le procédé de construction comportant un procédé de conception dans le but de construire le pont à poutres, dans lequel le pont à poutres sans diaphragme intermédiaire, sans coffrage suspendu et sans bloc denté à moment négatif comporte des poutres principales préfabriquées (1), un joint humide (2), des poutres transversales de chevêtre (3) et des structures inférieures (4), dans lequel des poutres principales préfabriquées adjacentes sont reliées par le joint humide (2), chaque poutre transversale de chevêtre est reliée à l'une des poutres principales préfabriquées (1) respective, et les poutres transversales de chevêtre (3) sont respectivement agencées au-dessus des structures inférieures (4) ; et
la poutre principale préfabriquée (1) comporte une âme et une dalle de tablier en béton, des dalles de tablier en béton adjacentes sont reliées par le joint humide (2), une surface de contact entre la dalle de tablier en béton et le joint humide forme une interface de jonction, et l'âme est formée d'un seul tenant avec la dalle de tablier en béton ;
**caractérisé en ce que** le procédé de conception du pont à poutres comporte les étapes suivantes :
S1, la conception de paramètres structuraux initiaux des poutres principales préfabriquées : en supposant, sur la base de données statistiques de dimensions structurales d'un pont à poutres construit, une forme transversale, une portée maximale *L* et un moment d'inertie transversal / des poutres principales préfabriquées ; en supposant qu'une épaisseur de chaque dalle de tablier en béton au niveau des interfaces de jonction est *T*₁, qu'une épaisseur de chaque dalle de tablier en béton au niveau des âmes est *T*₂ et qu'un nombre des poutres principales préfabriquées agencées dans une direction transversale du pont à poutres est *J* ; en numérotant les âmes de gauche à droite en direction transversale par 1^{ère}, 2^{e}, 3^{e}..., (*N*-1)^{e} et *N*^{e}, respectivement, et une distance transversale entre des lignes médianes des âmes aux deux extrémités du pont à poutres en direction transversale étant *D* ;
S2, le calcul des contraintes transversales indirectes des dalles de tablier en béton : en plaçant, selon une situation réelle d'appui, une charge sur une partie la plus extérieure en direction transversale du pont à poutres, en calculant un fléchissement non uniforme {Δ*ₙ*} des poutres principales préfabriquées, où {Δ*ₙ*} = {Δ₁, Δ₂, Δ₃, ..., Δ*_{N-1}*, Δ*_{N}*}, et Δ₁, Δ₂, Δ₃, ..., Δ*_{N-1}*, et Δ*_{N}* sont des déviations verticales des 1^{ère}, 2^{e}, 3^{e}..., (*N*-1)^{e} et *N^{e}* âmes, respectivement ; pour un segment le long d'une direction longitudinale du pont à poutres, en supposant que les parties inférieures des âmes dans le segment sont soutenues verticalement de manière solidaire, et en appliquant des déplacements forcés de Δ₁, Δ₂, Δ₃, ..., Δ*_{N-1}*, et Δ*_{N}* aux parties inférieures des 1^{ère}, 2^{e}, 3^{e}..., (*N*-1)^{e}, et *N^{e}* âmes de manière correspondante, et en calculant la contrainte transversale indirecte σ_{b1} sur une surface supérieure des dalles de tablier en béton à ce moment ; dans lequel,
le fléchissement non uniforme {Δ*ₙ*} est tel que {Δ*ₙ*} = {*m*ₙ}*w*, où *w* est un fléchissement vertical généré lorsqu'il est supposé que l'une des poutres principales préfabriquées du pont à poutres supporte seule la charge ; {*mₙ*} est un ensemble de facteurs de répartition transversale de charge de toutes les poutres principales préfabriquées lorsqu'elles sont chargées, {*mₙ*} est calculé selon un procédé classique de plaques solidarisées, et un moment d'inertie équivalent d'une dalle de tablier longitudinale de largeur unitaire dans le procédé de plaques solidarisées est *I*_{beq} = *F*(*D*/(*N*-1))³/(48*E*_{c}*w*_{eq}), où *E*_{c} est un module élastique de la dalle de tablier en béton, *F* est une force unitaire et *w*_{eq} est une flexibilité équivalente, et *w*_{eq} est calculée comme suit : en supposant que la dalle de tablier en béton entre les lignes médianes des 1^{ère} et 2^{e} âmes soit une poutre simplement soutenue qui est soutenue au niveau des âmes, lorsque *F* est appliquée à mi-portée de la poutre simplement soutenue, *w*_{eq} est un fléchissement vertical à mi-portée calculé par un procédé classique de mécanique structurale ou modélisation par éléments finis,
en variante, un modèle à éléments finis de pont complet est établi pour le fléchissement non uniforme {Δn} selon un procédé classique de grillage de Hambly, et une largeur d'une poutre transversale virtuelle dans le modèle est une largeur de travail réelle a des dalles de tablier en béton en direction longitudinale du pont à poutres, et a = max{(a₁+2hₚ)+D/(N-1)/3, 2D/(N-1)/3}, où a₁ est une dimension de contact d'une roue la plus lourde d'une charge de type véhicule en direction longitudinale du pont à poutres, et hₚ est une épaisseur totale d'une couche de nivellement et d'une couche de chaussée au-dessus des dalles de tablier en béton ; une charge de type véhicule ou train unique est placée à l'extrême gauche, et le fléchissement non uniforme {Δn} des poutres principales préfabriquées est calculé ;
S3, le calcul de la contrainte transversale directe des dalles de tablier en béton : en supposant que les parties inférieures des âmes sont soutenues verticalement de manière solidaire, en plaçant la charge sur la partie la plus extérieure en direction transversale du pont à poutres, et en calculant la contrainte transversale directe σ_{b2} sur la surface supérieure des dalles de tablier en béton ;
S4, le calcul de résistance à la fissuration de la surface supérieure des dalles de tablier en béton : en calculant une contrainte transversale la plus défavorable σ_{b} sur la surface supérieure des dalles de tablier en béton par superposition de la contrainte transversale indirecte σ_{b1} et de la contrainte transversale directe σ_{b2}, c'est-à-dire, σ_{b} = σ_{b1}+σ_{b2} ;
si σ_{b} ≥ *f*ₜⱼₚ à l'interface de jonction, où *f*ₜⱼₚ est une résistance à la traction et à la fatigue à l'interface de jonction, passer à l'étape S5 ; et
si σ_{b} < *f*ₜⱼₚ à l'interface de jonction, passer à l'étape S6 ;
S5, l'augmentation de *T*₁ et/ou *T*₂ et/ou *J* et/ou *I*, et/ou la réduction de *L*, le retour à l'étape S2, et le calcul, à nouveau, de la résistance à la fissuration de la surface supérieure des dalles de tablier en béton ; et
S6, l'achèvement de la conception restante selon un procédé classique : en appliquant des charges vivantes multivoies, multivéhicules et d'autres charges de conception suivant une approche classique de ligne d'influence, en déterminant une configuration de barres et d'armature de précontraintes dans les poutres principales préfabriquées selon un état de force interne de pont complet le plus défavorable sous la combinaison de charges de conception et un procédé classique de conception structurale pour achever la conception de pont à poutres ;
dans lequel la construction du pont à poutres est réalisée sur la base des valeurs de *T*₁, *T*₂, *J*, *I* et *L* obtenues à l'étape S6.

2. Procédé de construction selon la revendication 1, **caractérisé en ce que** la charge à l'étape S2 est placée à l'extrême gauche en direction transversale du pont à poutres dans le cadre des exigences réglementaires, et la charge à l'étape S3 est placée à l'extrême gauche en direction transversale du pont à poutres dans le cadre des exigences réglementaires.

3. Procédé de construction selon la revendication 1, **caractérisé en ce que**, pour une section de la dalle de tablier en béton d'une largeur longitudinale de *α*₀, la σ_{b1} à l'étape S2 est telle que σ_{b1} = *M*_{b1}/*W*_{b}, où *W*_{b} est un module de résistance de la section de la dalle de tablier en béton d'une largeur longitudinale *α*₀, et *M*_{b1} est le moment de flexion transversal indirect de la section de la dalle de tablier en béton de largeur longitudinale *α*₀ ; et
*M*_{b1} = *M*_{b1max}*d*_{y}/(*D*/2), dans lequel *d_{y}* est une distance transversale de la section à partir d'une ligne médiane de l'âme à l'extrême gauche ; *M*_{b1max} = *E*_{c}*I*_{bmax}*IR*_{eq}, *I*_{bmax} = *α*₀·[max(*T*₁, *T*₂)]³/12, où *E*_{c} est un module élastique de la dalle de tablier en béton, *R*_{eq} est un rayon de courbure équivalent de la dalle de tablier en béton sous les déplacements forcés de Δ₁, Δ₂, Δ₃, ..., Δ*_{N-1}*, et Δ*_{N}* ; *R*_{eq} = (*D*/2)²/(2Δ_{g}), où Δ_{g} est une cambrure relative ; lorsque *N* est un nombre impair, Δ_{g} = Δ _{(N+1)/2}-(Δ₁+Δ*_{N}*)/2, et lorsque *N* est un nombre pair, Δ_{g} = (Δ_{*N*/*2*}+Δ_{*N*/*2+1*})/2-(Δ₁+Δ*_{N}*)/2.

4. Procédé de construction selon la revendication 1, **caractérisé en ce qu'**un segment d'une largeur longitudinale de *α*₀ est pris à mi-portée longitudinale du pont à poutres, les parties inférieures des âmes dans le segment sont supposées être soutenues verticalement de manière solidaire, un axe le plus lourd d'une charge de type véhicule ou train unique est placé à l'extrême gauche du segment, et une contrainte de bord supérieur σ_{b22} en direction transversale à chaque section du segment est calculée selon un procédé classique de mécanique structurale ou une modélisation par éléments finis ; et
à l'étape S3, σ_{b2} à chaque section est telle que σ_{b2} = σ_{b22} *α*₀/vₙ, lorsque la section est située entre la *n^{e}* âme et la (*n*+1)^{e} âme, *α*ₙ = min{(*α*₁+2*h*ₚ)+*D*/(*N*-1)/3, 2*D*/(*N*-1)/3}+(*n*-1)*D*/(*N*-1)/3, autrement *α*ₙ = (*α*₁+2*h*ₚ)+2*d*_{c}, où *α*₁ est une dimension de contact d'une roue la plus lourde de la charge de type véhicule en direction longitudinale du pont à poutres, *h*ₚ est une épaisseur totale d'une couche de nivellement et d'une couche de chaussée au-dessus des dalles de tablier en béton, *d*_{c} est une distance entre le bord le plus à gauche d'une surface de contact de roue la plus à gauche de la charge de type véhicule et une ligne médiane de l'âme la plus à gauche.

5. Procédé de construction selon la revendication 1, **caractérisé en ce que**, à l'étape S4, la σ_{b} n'est calculée qu'en une position à mi-portée au niveau d'une portée maximale des dalles de tablier en béton en direction longitudinale, et le calcul de résistance à la fissuration n'est effectué qu'à une interface de jonction à une distance *d* d'une ligne médiane d'une âme la plus à gauche ; et lorsque *J* est un nombre impair, *d* est la distance de la ligne médiane de l'âme la plus à gauche en direction transversale à une interface de jonction gauche d'une (*J*+1)/2^{e} poutre principale préfabriquée, et lorsque *J* est un nombre pair, *d* est la distance de la ligne médiane de l'âme la plus à gauche en direction transversale à une interface de jonction droite d'une *J*/2^{e} poutre principale préfabriquée.

6. Procédé de construction selon la revendication 1, **caractérisé en ce que**, la *f*ₜⱼₚ à l'étape S4 est telle que *f*ₜⱼₚ = *Y*ⱼ*Y*ₚ·min(*f*_{ty}, *f*ₜⱼ), où *f*_{ty} est une valeur de conception d'une résistance à la traction de béton des poutres principales préfabriquées, *f*ₜⱼ est une valeur de conception d'une résistance à la traction de béton du joint humide, *Y*ⱼ est un coefficient de correction de la résistance à la traction du béton à l'interface de jonction, et *Y*ₚ est un coefficient de correction de la résistance à la traction et à la fatigue du béton.

7. Procédé de construction selon la revendication 1, **caractérisé en ce que**, une dalle en porte-à-faux est disposée sur une extrémité transversale de chacune des poutres principales préfabriquées, et une distance nette transversale de dalles en porte-à-faux entre poutres principales préfabriquées adjacentes est inférieure ou égale à 60 cm, une plaque d'amortissement est disposée au-dessus de la dalle en porte-à-faux, et la plaque d'amortissement est reliée au joint humide pour former une structure porteuse intégrée.

8. Procédé de construction selon la revendication 1, **caractérisé en ce que**, les poutres principales préfabriquées comportent en outre une armature de précontrainte à moment de flexion négatif et des rainures d'ancrage, deux poutres principales préfabriquées ou plus sont disposées en direction longitudinale du pont à poutres, et des poutres principales préfabriquées adjacentes en direction longitudinale du pont à poutres sont reliées par l'armature de précontrainte à moment de flexion négatif, avec min(*T*₁, *T*₂) ≥ 20 cm, les rainures d'ancrage sont préalablement ménagées dans les dalles de tablier en béton, dans lesquelles l'armature de précontrainte à moment de flexion négatif est ancrée.

9. Procédé de construction selon l'une quelconque des revendications 1 à 8, **caractérisé en ce que**, les poutres principales préfabriquées comportent en outre des nervures transversales de dalle de tablier, les dalles de tablier en béton sont munies de trous de dalle de tablier régulièrement espacés le long des directions longitudinale et transversale, les nervures transversales de dalle de tablier sont disposées entre des trous de dalle de tablier longitudinalement adjacents, et les nervures transversales de dalle de tablier sont munies de barres de renforcement au cisaillement agencées à intervalles le long de la direction transversale.

10. Procédé de construction selon l'une quelconque des revendications 1 à 8, **caractérisé en ce que**, chacune des poutres principales préfabriquées comporte en outre une structure de section en forme de caisson fermé, une dalle inférieure est disposée sur la partie inférieure de l'âme, la dalle inférieure, l'âme et la dalle de tablier en béton forment la structure de section en forme de caisson fermé, une extrémité transversale de la dalle de tablier en béton est munie d'une partie épaissie d'extrémité, et la partie épaissie d'extrémité est reliée au joint humide.

11. Procédé de construction selon la revendication 10, **caractérisé en ce que**, l'extrémité transversale de la dalle de tablier en béton est munie d'un chanfrein d'extrémité, la partie épaissie d'extrémité comporte une surface biseautée de partie épaissie et une surface plane de partie épaissie, la surface biseautée de partie épaissie est reliée au joint humide, une pente de la surface biseautée de partie épaissie est inférieure ou égale à 1,00, et *T*₁ > *T*₂.

12. Procédé de construction selon l'une quelconque des revendications 1 à 8, **caractérisé en ce que**, des dalles inférieures sont disposées au niveau des parties inférieures des âmes, des parties épaissies d'extrémité sont disposées au niveau des extrémités transversales des dalles de tablier en béton, une nervure transversale de dalle de tablier est ménagée entre chacune des âmes et une des parties épaissies d'extrémité correspondante, et les nervures transversales de dalle de tablier sont situées sous les dalles de tablier en béton et agencées à intervalles le long d'une direction longitudinale des dalles de tablier en béton.

13. Procédé de construction selon la revendication 12, **caractérisé en ce que**, chaque dalle de tablier en béton est reliée à l'une des nervures transversales de dalle de tablier correspondante, et l'épaisseur *T*₁ de chaque dalle de tablier en béton au niveau de l'interface de jonction comporte une épaisseur transversale de la dalle de tablier en béton et une épaisseur transversale de l'une des nervures transversales de dalle de tablier correspondante au niveau de l'interface de jonction, et *T*₁ ≥ 30 cm.

14. Procédé de construction selon l'une quelconque des revendications 1 à 8, **caractérisé en ce que**, les âmes des poutres principales préfabriquées comportent une structure en acier, et les surfaces latérales des âmes sont munies de nervures verticales d'âme espacées le long de la direction longitudinale du pont à poutres, et les extrémités supérieures des nervures verticales d'âme sont reliées aux dalles de tablier.

15. Procédé de construction selon la revendication 14, **caractérisé en ce que**, les poutres principales préfabriquées comportent en outre des nervures transversales de dalle de tablier, les nervures transversales de dalle de tablier sont agencées entre les nervures et les parties épaissies d'extrémité, et les nervures verticales de dalle sont situées aux mêmes positions que les nervures transversales de dalle de tablier sur la direction longitudinale du pont à poutres pour résister à une déformation transversale transmise par les nervures transversales de dalle de tablier.
